(19) **Europäisches Patentamt European Patent Office Office européen des brevets**

(11) **EP 3 168 754 B1**

(12) **FASCICULE DE BREVET EUROPEEN**

(45) Date de publication et mention de la délivrance du brevet:
**14.02.2024 Bulletin 2024/07**

(21) Numéro de dépôt: **16199185.6**

(22) Date de dépôt: **16.11.2016**

(51) Classification Internationale des Brevets (IPC):
**G06F 17/10** (2006.01)     **G06F 21/32** (2013.01)
**H04L 9/32** (2006.01)     **H04L 9/40** (2022.01)

(52) Classification Coopérative des Brevets (CPC):
**H04L 63/0861; G06F 17/10; G06F 21/32;**
**H04L 9/3231; H04L 63/061;** H04L 2209/46;
H04L 2209/76

(54) **PROCÉDÉ D'IDENTIFICATION D'UNE ENTITÉ**

IDENTIFIZIERUNGSVERFAHREN EINER EINHEIT

METHOD FOR IDENTIFYING AN ENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2015 FR 1560942**

(43) Date de publication de la demande:
**17.05.2017 Bulletin 2017/20**

(73) Titulaire: **Idemia Identity & Security France 92400 Courbevoie (FR)**

(72) Inventeurs:
• **BRINGER, Julien**
**92130 Issy-les-Moulineaux (FR)**
• **LESCUYER DE CHAPTAL-LAMURE, Roch Olivier**
**92130 Issy-les-Moulineaux (FR)**
• **CHABANNE, Hervé**
**92130 Issy-les-Moulineaux (FR)**
• **SORIA-VAZQUEZ, Eduardo**
**92130 Issy-les-Moulineaux (FR)**

(74) Mandataire: **Idemia**
**2, place Samuel de Champlain**
**92400 Courbevoie (FR)**

(56) Documents cités:
• BRYAN PARNO ET AL: "Pinocchio: Nearly Practical Verifiable Computation", SECURITY AND PRIVACY (SP), 2013 IEEE SYMPOSIUM ON, IEEE, 19 mai 2013 (2013-05-19), pages 238-252, XP032431327, DOI: 10.1109/SP.2013.47 ISBN: 978-1-4673-6166-8

• JULIEN BRINGER ET AL: "GSHADE: Faster Privacy-Preserving Distance Computation and Biometric Identification", PROCEEDINGS OF THE 2ND ACM WORKSHOP ON INFORMATION HIDING AND MULTIMEDIA SECURITY, IH&MMSEC '14, 11 juin 2014 (2014-06-11), pages 187-198, XP055291441, New York, New York, USA DOI: 10.1145/2600918.2600922 ISBN: 978-1-4503-2647-6

• Anonymous: "Efficient way to multiply a large set of small numbers", Stack Overflow site, 16 avril 2014 (2014-04-16), pages 1-8, XP055291382, Extrait de l'Internet: URL:http://stackoverflow.com/questions/230 90917/efficient-way-to-multiply-a-large-se t-of-small-numbers [extrait le 2016-07-26]

• BRINGER JULIEN ET AL: "Some applications of verifiable computation to biometric verification", 2015 IEEE INTERNATIONAL WORKSHOP ON INFORMATION FORENSICS AND SECURITY (WIFS), IEEE, 16 novembre 2015 (2015-11-16), pages 1-6, XP032840440, DOI: 10.1109/WIFS.2015.7368568

• CRAIG COSTELLO ET AL: "Geppetto: Versatile Verifiable Computation", INTERNATIONAL ASSOCIATION FOR CRYPTOLOGIC RESEARCH,, vol. 20141201:093827, décembre 2014 (2014-12), pages 1-22, XP061017488,

• JULIEN BRINGER ET AL: "Privacy-Preserving Biometric Identification Using Secure Multiparty Computation: An Overview and Recent Trends", IEEE SIGNAL PROCESSING MAGAZINE, IEEE SERVICE CENTER, PISCATAWAY, NJ, US, vol. 30, no. 2, mars 2013 (2013-03), pages 42-52, XP011494320, ISSN: 1053-5888, DOI: 10.1109/MSP.2012.2230218

- MAURO BARNI ET AL: "Privacy Protection in Biometric-Based Recognition Systems: A marriage between cryptography and signal processing", IEEE SIGNAL PROCESSING MAGAZINE., vol. 32, no. 5, septembre 2015 (2015-09), pages 66-76, XP055291264, US ISSN: 1053-5888, DOI: 10.1109/MSP.2015.2438131
- MICHAEL WALFISH ET AL: "Verifying computations without reexecuting them", COMMUNICATIONS OF THE ACM, ASSOCIATION FOR COMPUTING MACHINERY, INC, UNITED STATES, vol. 58, no. 2, 28 janvier 2015 (2015-01-28), pages 74-84, XP058064922, ISSN: 0001-0782, DOI: 10.1145/2641562
- MANEESH UPMANYU ET AL: "Efficient Biometric Verification in Encrypted Domain", 2 juin 2009 (2009-06-02), ADVANCES IN BIOMETRICS, SPRINGER BERLIN HEIDELBERG, BERLIN, HEIDELBERG, PAGE(S) 899 - 908, XP019118006, ISBN: 978-3-642-01792-6 * le document en entier *

**Description**

DOMAINE TECHNIQUE GENERAL

La présente invention concerne le domaine de l'identification d'une entité, individu ou objet. Plus précisément, elle concerne un procédé d'identification biométrique dans lequel la comparaison à des données biométriques de référence est déléguée à un dispositif distant dans le cadre d'un protocole de calcul publiquement vérifiable.

ETAT DE LA TECHNIQUE

Du fait de la miniaturisation croissante des systèmes de calculs numériques, il existe dorénavant une large gamme de dispositifs numériques dotés d'une puissance de calcul variable, de la carte à puce au supercalculateur en passant par le smartphone et l'ordinateur personnel. Dans un tel cadre il peut être intéressant pour un dispositif doté d'une puissance de calcul limitée de déléguer des calculs coûteux à un dispositif distant doté d'une puissance de calcul plus importante. Une telle délégation a particulièrement été rendue plus facile ces dernières années par le développement des réseaux de communication à haut débit et d'une offre de calculs déportés dans le cloud.

Une telle délégation de calculs pose néanmoins le problème de la confiance pouvant être accordée aux résultats de calcul transmis par un exécutant distant. Des erreurs de calcul peuvent en effet se produire, aussi bien du fait de problèmes techniques indépendants de la volonté de l'exécutant, que du fait d'une action volontaire et malicieuse.

Ainsi, d'importants efforts ont été réalisés afin de mettre au point un protocole de calcul, dit de calcul vérifiable, permettant à un exécutant distant de prouver au dispositif ayant commandé un calcul que celui-ci a été exécuté correctement. Pendant longtemps, les protocoles mis au point sont cependant restés applicable uniquement à des fonctions spécifiques, ou bien sont restés inexploitables en pratique du fait de l'importante quantité de calculs nécessaire au donneur d'ordre pour vérifier la preuve fournie par l'exécutant.

Le protocole Pinocchio présenté dans la publication « Bryan Parno, Craig Gentry, Jon Howell, and Mariana Raykova, Pinocchio: Nearly Practical Vérifiable Computation, in Proceedings of the IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même, permettant ainsi au donneur d'ordre d'effectivement tirer avantage de la délégation du calcul malgré le surcout lié à la vérification de la preuve.

Le protocole Pinocchio présente néanmoins l'inconvénient majeur de nécessiter une puissance de calcul importante du côté de l'exécutant. Le coût de production de la preuve d'un calcul par ce protocole est en effet supérieur de plusieurs ordres de grandeur à celui du calcul lui-même.

Le protocole Pinocchio repose sur une transcription de la fonction à évaluer sous la forme d'un circuit arithmétique et la construction du programme arithmétique quadratique (QAP, « Quadratic Arithmetic Program ») correspondant. Le coût de calcul augmente alors avec le nombre de multiplieurs dans ce circuit arithmétique. Un tel nombre peut rapidement devenir important, par exemple dans le cas où la fonction comprend une boucle dont chaque itération doit être représentée explicitement par ses propres opérateurs dans le circuit. Ceci limite l'emploi pratique d'un tel protocole à l'évaluation de fonctions très simples.

Ce protocole a ensuite été amélioré au travers du protocole Geppetto, présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Vérifiable Computation, in Proceedings of the IEEE Symposium on Security and Privacy, IEEE, 18 May 2015». Ce nouveau protocole de calcul vérifiable propose de découper la fonction à évaluer en plusieurs sous-fonctions, éventuellement utilisées plusieurs fois pour l'évaluation de la fonction globale, par exemple à chaque itération d'une boucle. La preuve de l'évaluation de cette fonction peut ensuite être construite à partir des preuves moins couteuses relatives à l'évaluation de telles sous-fonctions. Le circuit arithmétique total peut alors être grandement simplifié par rapport à celui du protocole Pinocchio, limitant grandement le nombre de multiplieurs à employer. Le coût total de production de la preuve pour l'exécutant est alors réduit par rapport à celui du protocole Pinocchio. Le coût de calcul d'une preuve dans le cadre du protocole Geppetto reste cependant croissant avec le nombre de multiplieurs nécessaires à la représentation de la fonction à évaluer sous forme de circuit arithmétique. Une technique d'amorçage (« bootstrapping ») a été introduite pour améliorer la situation ; toutefois la mise en oeuvre de ce procédé dégrade les performances.

De nombreux autres dérivés du protocole Pinocchio ont été proposés, et on trouve des applications variées dans de mutiples domaines techniques. Par exemple, le protocole Cendrillon présenté dans la publication « Antoine Delignat-Lavaud, Cedric Fournet, Markulf Kohlweiss and Bryan Parno, Cinderella: Turning Shabby X.509 Certificates into Elegant Anonymous Credentials with the Magic of Verifiable Computation, in 2016 IEEE Symposium on Security and Privacy », concerne la signature de documents électronique, et le protocole PhotoProof, présenté dans la publication « Assa Naveh, Eran Tromer, PhotoProof: cryptographie image authentication for any set of permissible transformations, proc. IEEE Symposium on Security & Privacy (Oakland) 2016, 255-271, IEEE, 2016 » permet de garantir qu'une photographie n'a été modifiée que selon un ensemble de transformations admissible et n'a pas été falsifiée.

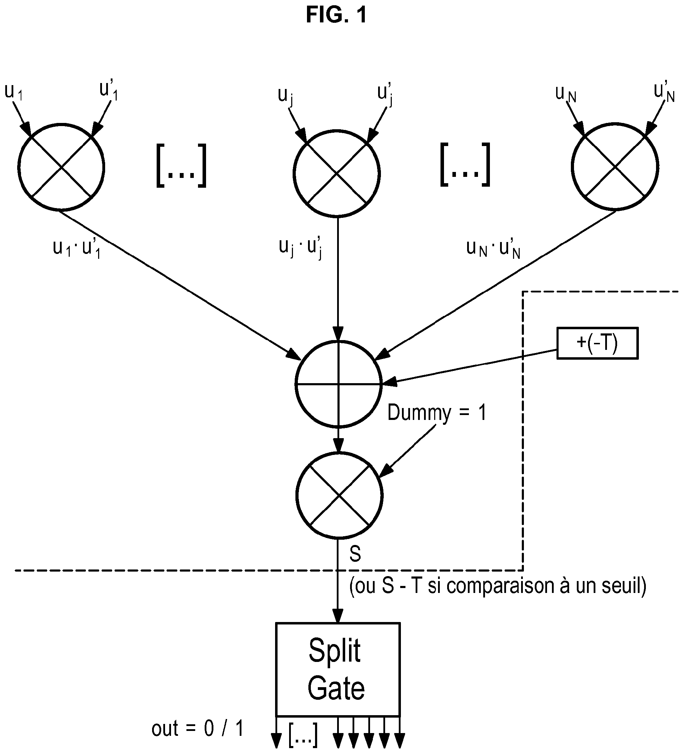

Dans le cadre d'une identification biométrique il est nécessaire de comparer une empreinte biométrique à une multitude d'empreintes biométriques de référence, en un temps suffisamment court pour être supporté par l'individu à identifier. Une telle comparaison entre deux empreintes biométriques représentées chacune sous forme d'un vecteur u, respectivement u', de N entiers binaires $u_i$ ou $u'_i$, peut être mise en oeuvre en calculant le produit scalaire u.u' entre ces deux vecteurs. Le circuit arithmétique correspondant à un tel produit scalaire est représenté en **figure 1.** Il comprend alors au moins N multiplieurs prenant chacun en entrée un entier $u_i$ et l'entier $u'_i$ correspondant. Un tel nombre de multiplieurs implique une quantité de calcul par les protocoles décrits ci-dessus trop importante pour être réalisée en temps réel, rendant ainsi de tels protocoles inadaptés à une utilisation dans le cadre d'un procédé d'identification biométrique.

Il existe donc un besoin d'un procédé d'identification biométrique permettant de déléguer à une entité distante la comparaison d'empreintes biométriques dans le cadre d'un protocole de calcul vérifiable, pour un coût de calcul, production et vérification de preuve comprises, permettant une exécution en temps réel.

PRESENTATION DE L'INVENTION

La présente invention propose selon un premier aspect un procédé d'identification biométrique d'une entité, par un système d'identification biométrique comprenant un dispositif client et un dispositif de calcul distant, comprenant :

- un calcul d'au moins une valeur de correspondance entre au moins une donnée biométrique de l'entité u et au moins une donnée biométrique de référence u', par application d'une fonction F auxdites données biométriques, chacune desdites données étant un vecteur de N entiers binaires $u_i$ ou $u'_i$ avec $1 \le i \le N$, chaque entier étant codé sur n bits, ladite fonction comprenant un produit scalaire entre une donnée biométrique de l'entité et une donnée biométrique de référence, ledit calcul mettant en oeuvre un procédé non-interactif de calcul publiquement vérifiable comprenant des étapes de :

  - représentation de ladite fonction sous forme d'un circuit arithmétique comprenant des fils transportant des valeurs du corps premier fini $\mathbb{Z}_q$ , avec q un nombre premier, et reliant des opérateurs d'addition et de multiplication,
  - conversion dudit circuit arithmétique en une représentation polynomiale, QAP (« Quadratic Arithmetic Program ») ou multi-QAP,
  - génération d'une clé publique d'évaluation et d'une clé publique de vérification en fonction de ladite représentation polynomiale,
  - obtention par le dispositif de calcul distant du circuit arithmétique et de la clé publique d'évaluation,
  - pour chaque donnée biométrique de l'entité, détermination d'au moins une valeur de correspondance entre ladite donnée biométrique et au moins une donnée biométrique de référence par le dispositif de calcul distant en évaluant le circuit arithmétique ayant pour entrées la donnée biométrique de l'entité et la donnée biométrique de référence,
  - pour chaque valeur de correspondance déterminée, génération par le dispositif de calcul distant d'une preuve de la correction de l'exécution du calcul de la valeur de correspondance, dite preuve générée, à partir de ladite représentation polynomiale, de la clé publique d'évaluation et du résultat de l'évaluation du circuit arithmétique,

    - transmission par le dispositif de calcul distant desdites valeurs de correspondance et desdites preuves générées au dispositif client,
    - vérification desdites preuves reçues par le dispositif client à l'aide de la clé de vérification publique,

  - une identification de l'entité par le dispositif client en fonction des valeurs de correspondance et du résultat de ladite vérification de preuves,

- la représentation de ladite fonction comprend l'encodage d'un nombre entier k>1 d'entiers binaires d'un vecteur d'une donnée biométrique sur au moins un fil d'entrée du circuit,
- et la fonction F comprenant au moins m produits scalaires, m étant un diviseur de la longueur N des vecteurs de données biométriques,

  - si le diviseur m est égal à 2 ou 3,

le circuit comprend au moins N/km opérateurs de multiplication reliés aux fils d'entrée du circuit, une mémoire de stockage, et au moins un opérateur d'addition,

et l'évaluation du circuit comprend itérativement un calcul de chacun des m produits scalaires à l'aide desdits N/km opérateurs de multiplication, un stockage des m résultats des calculs desdits produits scalaires dans ladite mémoire de stockage et une sommation desdits résultats à l'aide dudit opérateur d'addition,

▪ si le diviseur m est supérieur ou égal à 4,

le circuit comprend au moins un premier sous-circuit de calcul de produit scalaire comprenant N/km premiers opérateurs de multiplication reliés aux fils d'entrée du circuit et une première mémoire de stockage, et un second sous-circuit de calcul de produit scalaire comprenant N/km seconds opérateurs de multiplication reliés aux fils d'entrée du circuit et une seconde mémoire de stockage, chacun desdits sous-circuit étant également relié à une sortie de la mémoire de stockage de l'autre sous-circuit,

et l'évaluation du circuit comprend itérativement un calcul de chacun des m produits scalaires en utilisant alternativement le premier ou le second sous-circuit pour calculer la somme du produit scalaire des valeurs des fils d'entrée de ce sous-circuit et de la valeur stockée dans la mémoire de stockage de l'autre sous-circuit.

Ceci permet au dispositif client de déléguer le calcul des produits scalaires nécessaires à l'identification biométrique de l'entité, tout en lui permettant de vérifier l'exactitude des calculs réalisés par le dispositif distant, le tout pour un coût modéré du fait de la complexité réduite des circuits utilisés pour représenter la fonction de produit scalaire. De tels circuits comprennent en effet environ de l'ordre de k*m moins de multiplieurs que le circuit selon l'état de l'art.

Si le diviseur m de la longueur N des vecteurs de données biométriques est égal à 1, étant donné un environnement bilinéaire asymétrique $(q, G_1, G_2, G_T, g_1, g_2, e)$ où $q$ est un nombre premier $G_1$, $G_2$ et $G_T$ trois groupes d'ordre $q$, $g_1$ un générateur de $G_1$, $g_2$ un générateur de $G_2$, et e un couplage bilinéaire non-dégénéré $e: G_1 \times G_2 \to G_T$ et le circuit arithmétique étant représenté sous la forme d'un QAP du circuit $Q = (t, V, W, Y)$ de taille $\rho$ et de degré $\delta$, avec V={vi}, W={wi}, Y={yi}, $0 \le i \le \rho$,

et étant donnés $I_{io} = \{1, ..., \theta\}$ l'ensemble des indices correspondants aux fils d'entrée/sortie du circuit et $I_{mid} = \{\theta + 1, ..., \rho\}$ l'ensemble des indices des fils intermédiaires du circuit n'étant pas des fils d'entrée du circuit,

- l'étape de génération d'une clé publique d'évaluation et d'une clé publique de vérification comprend :

  • la génération d'aléas $r_v$, $r_w$, $s$, $\alpha_v$, $\alpha_w$, $\alpha_y$, $\beta$, $\gamma$ dans $\mathbb{Z}_q$,
  • la définition des coefficients $r_y = r_v \cdot r_w$, $g_{v1} = g_1^{r_v}$, $g_{w1} = g_1^{r_w}$, $gw_2 = g_2^{r_w}$, $g_{y1} = g_1^{r_y}$ et $g_{y2} = g_2^{r_y}$,
  • la génération de la <u>clé publique d'évaluation</u> $EK_F$ égale à $(EK_{F1}, EK_{F2})$ où

$$EK_{F1} = \begin{pmatrix} \left\{g_{v1}^{v_i(s)}\right\}_{i \in I_{mid}}, \left\{g_{w1}^{w_i(s)}\right\}_{i \in I_{mid}}, \left\{g_{y1}^{y_i(s)}\right\}_{i \in I_{mid}}, \\ \left\{g_{v1}^{\alpha_v \cdot v_i(s)}\right\}_{i \in I_{mid}}, \left\{g_{w1}^{\alpha_w \cdot w_i(s)}\right\}_{i \in I_{mid}}, \left\{g_{y1}^{\alpha_y \cdot y_i(s)}\right\}_{i \in I_{mid}}, \\ \left\{g_1^{s^i}\right\}_{i \in [1,\delta]}, \left\{g_{v1}^{\beta \cdot v_i(s)} \cdot g_{w1}^{\beta \cdot w_i(s)} \cdot g_{y1}^{\beta \cdot y_i(s)}\right\}_{i \in I_{mid}} \end{pmatrix}$$

$$EK_{F2} = \left(\left\{g_{w2}^{w_i(s)}\right\}_{i \in I_{mid}}\right)$$

  • la génération de la <u>clé publique de vérification</u> $VK_F$ égale à $(VK_{F1}, VK_{F2})$ où :

$$VK_{F1} = \left(g_1, \left\{g_{v1}^{v_i(s)}\right\}_{i \in [1,\theta]}, \left\{g_{y1}^{y_i(s)}\right\}_{i \in [1,\theta]}\right)$$

$$VK_{F2} = \left(g_2, g_2^{\alpha_v}, g_2^{\alpha_w}, g_2^{\alpha_y}, g_2^{\gamma}, g_2^{\beta \cdot \gamma}, g_{y2}^{t(s)}, \left\{g_{w2}^{w_i(s)}\right\}_{i \in [1,\theta]}\right)$$

- la génération par le dispositif de calcul distant d'une preuve de la correction de l'exécution du calcul d'une valeur de correspondance comprend, $\{c_i\}_{i \in [1,\rho]}$ étant l'ensemble des valeurs du circuit déterminées lors de l'étape de détermination de la valeur de correspondance:

- la détermination d'un polynôme $h(x)$ tel que $p(x) = h(x) \cdot t(x)$ avec $p(x) =$

$$\left(v_0(x) + \sum_{i=1}^{\rho} c_i \cdot v_i(x)\right) \cdot \left(w_0(x) + \sum_{i=1}^{\rho} c_i \cdot w_i(x)\right) - \left(y_0(x) + \sum_{i=1}^{\rho} c_i \cdot y_i(x)\right),$$

- le calcul de la <u>preuve générée</u> $\pi = (\pi_1, \pi_2)$ avec :

$$\pi_1 = \begin{pmatrix} g_{v1}{}^{v_{mid}(s)}, g_{w1}{}^{w_{mid}(s)}, g_{y1}{}^{y_{mid}(s)}, g_1{}^{h(s)}, \\ g_{v1}{}^{\alpha_v \cdot v_{mid}(s)}, g_{w1}{}^{\alpha_w \cdot w_{mid}(s)}, g_{y1}{}^{\alpha_y \cdot y_{mid}(s)}, \\ g_{v1}{}^{\beta \cdot v_{mid}(s)} \cdot g_{w1}{}^{\beta \cdot w_{mid}(s)} \cdot g_{y1}{}^{\beta \cdot y_{mid}(s)} \end{pmatrix}, \pi_2 = \left(g_{w2}{}^{w_{mid}(s)}\right)$$

où :

$$v_{mid}(x) = \sum_{i \in I_{mid}} c_i \cdot v_i(x), \qquad w_{mid}(x) = \sum_{i \in I_{mid}} c_i \cdot w_i(x) \qquad \text{et} \qquad y_{mid}(x) = \sum_{i \in I_{mid}} c_i \cdot y_i(x),$$

- et, dans lequel lesdites preuves reçues par le dispositif client étant égales à $(\pi_{r1}, \pi_{r2})$ avec $\pi_{r1}$ sous la forme : $(g_{v1}{}^{V_{mid}}, g_{w1}{}^{W_{mid}}, g_{y1}{}^{Y_{mid}}, g_1{}^{H}, g_{v1}{}^{V'_{mid}}, g_{w1}{}^{W'_{mid}}, g_{y1}{}^{Y'_{mid}}, g_1{}^{Z})$ et $\pi_{r2}$ sous la forme $g_{w2}{}^{W_{mid}}$, la vérification d'une preuve reçue comprend la mise en oeuvre des tests d'égalité suivants :

- $$e\left(g_{v1}{}^{v_0(s)} \cdot g_{v1}{}^{v_{io}(s)} \cdot g_{v1}{}^{V_{mid}}, g_{w2}{}^{w_0(s)} \cdot g_{w2}{}^{w_{io}(s)} \cdot g_{w2}{}^{W_{mid}}\right) =$$
$$e\left(g_1{}^{H}, g_{y2}{}^{t(s)}\right) \cdot e\left(g_{y1}{}^{y_0(s)} \cdot g_{y1}{}^{y_{io}(s)} \cdot g_{y1}{}^{Y_{mid}}, g_2\right),$$

- $$e\left(\left(g_{v1}{}^{V'_{mid}}\right)^{d_1} \cdot \left(g_{w1}{}^{W'_{mid}}\right)^{d_2} \cdot \left(g_{y1}{}^{Y'_{mid}}\right)^{d_3}, g_2\right) = e\left(\left(g_{v1}{}^{V_{mid}}\right)^{d_1}, g_2{}^{\alpha_v}\right) \cdot$$
$$e\left(\left(g_{w1}{}^{W_{mid}}\right)^{d_2}, g_2{}^{\alpha_w}\right) \cdot e\left(\left(g_{y1}{}^{Y_{mid}}\right)^{d_3}, g_2{}^{\alpha_y}\right),$$

- $$e\left(g_1{}^{Z}, g_2{}^{Y}\right) = e\left(g_{v1}{}^{V_{mid}} \cdot g_{w1}{}^{W_{mid}} \cdot g_{y1}{}^{Y_{mid}}, g_2{}^{\beta \cdot Y}\right)$$

où $g_{v1}{}^{v_{io}(s)} = \prod_{i=1}^{\theta}\left(g_{v1}{}^{v_i(s)}\right)^{c_i}$, $g_{w2}{}^{w_{io}(s)} = \prod_{i=1}^{\theta}\left(g_{w2}{}^{w_i(s)}\right)^{c_i}$ et $g_{y1}{}^{y_{io}(s)} = \prod_{i=1}^{\theta}\left(g_{y1}{}^{y_i(s)}\right)^{c_i}$ et $(d_1, d_2, d_3)$ des éléments de $\mathbb{Z}_q$ sur $\lambda$ bits avec $\lambda$ un paramètre de sécurité.

La vérification de la preuve d'un calcul est ainsi accélérée par rapport au protocole Pinocchio, grâce à la vérification simultanée de plusieurs couplages.

L'étape de vérification desdites preuves reçues peut comprendre une vérification de couplages par lot.

L'identification de l'entité peut comprendre une comparaison des valeurs de correspondance à un seuil prédéterminé.

La fonction F peut comprendre une comparaison du résultat du produit scalaire entre lesdites données biométriques de l'entité et de référence à un seuil prédéterminé. Une telle comparaison à un seuil permet de décider si les données biométriques comparées sont suffisamment proches pour conclure à une identification réussie de l'entité à identifier.

L'encodage de k entiers binaires $u_i$ ou $u'_i$ sur un fil d'entrée d'un $j^{\text{ème}}$ opérateur de multiplication, $1 \leq j \leq N/k$, est égal à $E_k{}^{\left(\frac{(z-1)N}{m} + (j-1)k+1\right)}(u)$ ou $E_k{}^{\left(\frac{(z-1)N}{m} + (j-1)k+1\right)}(u')$ avec $1 \leq z \leq m$, et est donné par la formule :

$$E_k^{((j-1)k+1)}(x) = \sum_{i=1}^{k} 2^{\varepsilon_i} \cdot x_{(j-1)k+i} = 2^{\varepsilon_1} \cdot x_{(j-1)k+1} + \cdots + 2^{\varepsilon_k} \cdot x_{(j-1)k+k}$$

avec $\varepsilon_1, \ldots, \varepsilon_k$ des entiers prédéterminés.

Plusieurs entiers des données biométriques peuvent ainsi être encodés sur chaque fil d'entrée, réduisant le nombre de multiplieurs nécessaires au calcul du produit scalaire entre une donnée biométrique de l'entité et une donnée biométrique de référence.

Selon un deuxième aspect, l'invention concerne un produit programme d'ordinateur comprenant des instructions de code pour l'exécution d'un procédé selon le premier aspect lorsque ce programme est exécuté par un processeur.

Selon un troisième aspect, l'invention concerne un système d'identification biométrique comprenant un dispositif client et un dispositif de calcul distant caractérisé en ce que ledit dispositif client et ledit dispositif de calcul distant comprennent chacun un processeur, une interface et une mémoire pour mettre en oeuvre les étapes du procédé d'identification selon le premier aspect.

De tels produit programme d'ordinateur et système présentent les mêmes avantages que ceux évoqués pour le procédé selon le premier aspect.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 illustre un circuit arithmétique correspondant à une implémentation naïve d'un produit scalaire pour l'identification biométrique d'une entité ;

- la figure 2 représente un système d'identification selon un mode de réalisation de l'invention ;

- la figure 3 est un diagramme schématisant une mise en oeuvre d'un procédé d'identification selon l'invention ;

- les figures 4a et 4b illustrent un circuit arithmétique pour l'identification biométrique d'une entité selon un premier mode de mise en oeuvre de l'invention;

- les figures 5a et 5b illustrent un exemple de mise en oeuvre du circuit des figures 4 pour N = 3000, n = 8, q = 256, k = 3 ;

- les figures 6a à 6c illustrent un circuit arithmétique pour l'identification biométrique d'une entité selon un autre mode de mise en oeuvre qui ne relève pas de l'invention et qui est présent à titre illustratif;

- les figures 7a et 7b illustrent un circuit arithmétique pour l'identification biométrique d'une entité selon un autre mode de mise en oeuvre qui ne relève pas de l'invention et qui est présent à titre illustratif;

DESCRIPTION DETAILLEE

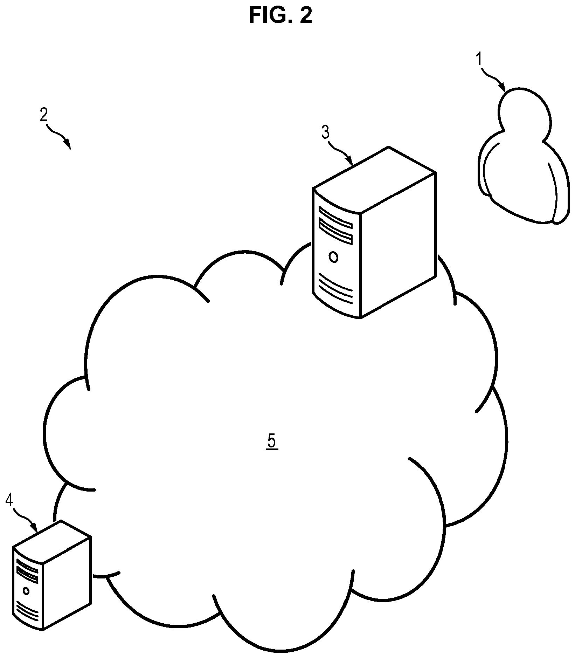

La présente invention concerne une mise en oeuvre d'un procédé d'identification biométrique d'une entité 1 par un système d'identification 2 comprenant un dispositif client 3 et un dispositif de calcul distant 4 susceptibles d'être reliés entre eux par un réseau de communication 5, comme représenté en **figure 2.** Une telle entité peut être un individu ou bien un objet possédant des données biométriques tel qu'un passeport biométrique.

Le dispositif client et le dispositif de calcul distant peuvent chacun comprendre une mémoire vive et des moyens de stockage internes tels qu'une mémoire non volatile réinscriptible (mémoire flash ou mémoire EEPROM) et des moyens de traitement comportant un processeur. Ils peuvent également comprendre une interface leur permettant de dialoguer entre eux, de type filaire tel qu'une liaison Ethernet, ou sans-fil tel qu'une connexion Wifi ou Bluetooth.

Le procédé mis en oeuvre a alors pour but de permettre au dispositif de déléguer au dispositif de calcul distant les calculs nécessaires à l'identification biométrique de l'entité à identifier, de façon à ce que les calculs réalisés par le dispositif de calcul distant soient publiquement vérifiables, le tout en une durée suffisamment courte pour être acceptable dans le cadre d'un procédé d'identification.

Pour réaliser une telle identification biométrique, le dispositif client acquiert au moins une donnée biométrique de l'entité à identifier u. Afin d'identifier l'entité, cette au moins une donnée biométrique u doit être comparée à une ou plusieurs données biométriques de référence u', mémorisées préalablement.

A titre d'exemple, de telles données biométriques peuvent être des empreintes digitales, ADN, vocales ou bien encore des images d'iris ou de réseaux veineux. Chacune de ces données biométriques est un vecteur de N entiers binaires $u_i$ ou $u'_i$ avec $1 \leq i \leq N$. Chaque entier $u_i$ ou $u'_i$ est codé sur n bits. Par exemple dans le cas d'une donnée biométrique de visage, on peut typiquement avoir $N = 3000$ et $n = 8$.

Le dispositif client peut comprendre ou être relié à un dispositif de capture de telles données biométriques, tel qu'un lecteur d'empreinte digitale, un microphone, ou un dispositif d'imagerie d'iris. Ce dispositif de capture peut être employé pour acquérir la donnée biométrique u acquise pour l'entité 1. Les données biométriques de référence u' peuvent être stockées dans les moyens de stockage du dispositif client ou du dispositif de calcul distant.

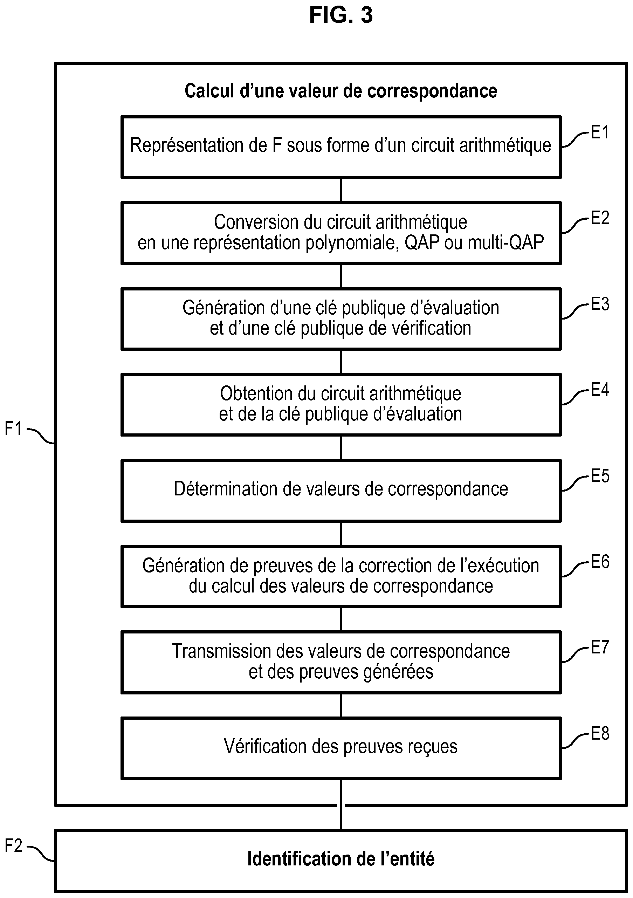

Le procédé d'identification peut comprendre les étapes décrites ci-dessous en référence à la **figure 3.**

Tout d'abord au moins une valeur de correspondance peut être calculée F1 entre au moins une donnée biométrique de l'entité u et au moins une donnée biométrique de référence u', par application d'une fonction F, dite de corrélation, auxdites données biométriques. La fonction F comprend un produit scalaire entre une donnée biométrique de l'entité et une donnée biométrique de référence. Un tel produit scalaire permet en effet de calculer un score

$$S = \sum_{j=1}^{N} \left( u_j \cdot u'_j \right)$$ d'autant plus élevé que les données comparées sont semblables. Un tel score peut alors être utilisé comme valeur de correspondance. Afin de déterminer si une tentative d'identification a réussi, les valeurs de correspondance peuvent être comparées à un seuil prédéterminé T. Alternativement, la fonction F peut comprendre la comparaison du résultat du produit scalaire entre les données biométriques de l'entité u et de référence u', ie du score S, à ce seuil prédéterminé T. Le calcul de la valeur de correspondance peut alors comprendre le calcul de la valeur (S - T) et la valeur de correspondance issue d'un tel calcul peut être un bit de signe prenant par exemple la valeur 1 si S-T >0, la valeur 0 sinon.

Afin de garantir la qualité du résultat obtenu, le calcul d'une telle valeur de correspondance F1 met en oeuvre un procédé non-interactif de calcul publiquement vérifiable. Un tel procédé se découpe généralement en trois phases :

- une représentation de la fonction F à évaluer sous forme de système de contraintes représenté sous la forme d'un circuit arithmétique.
- une transformation de ce circuit arithmétique en représentation polynomiale appelée « Quadratic Arithmetic Programs » (abrégé en QAP dans la suite).
- une génération d'une preuve de la correction de l'exécution du calcul à partir du QAP.

Le procédé non-interactif de calcul publiquement vérifiable mis en oeuvre comprend plus précisément tout d'abord une étape de représentation E1 de ladite fonction F sous forme d'un circuit arithmétique. Un tel circuit arithmétique comprend des fils transportant des valeurs du corps premier fini Zq, avec q un nombre premier, et reliant des opérateurs d'addition et de multiplication. Typiquement la taille q des valeurs des fils du circuit peut être égale à 256 bits.

Le circuit arithmétique est ensuite converti E2 en une représentation polynomiale, QAP (« Quadratic Arithmetic Program ») ou multi-QAP. De telles représentations et la façon de les obtenir à partir d'un circuit arithmétique sont décrites plus en détail dans les publications référencées ci-dessus concernant les protocoles Pinocchio et Geppetto existants.

Puis une clé publique d'évaluation et une clé publique de vérification sont générées E3 en fonction de ladite représentation polynomiale. Le dispositif de calcul distant obtient E4 ensuite le circuit arithmétique, et la clé publique d'évaluation.

Les étapes de représentation sous forme de circuit arithmétique E1, de conversion en une représentation polynomiale E2 et de génération des clés E3 peuvent être mises en oeuvre par le dispositif client lui-même. Alternativement ces étapes peuvent être déléguées à un tiers de confiance. De telles étapes étant indépendantes de la valeur des données biométriques à comparer, elles peuvent être mises en oeuvre une unique fois, préalablement aux comparaisons de données biométriques décrites ci-dessous, et n'ont pas besoin d'être répétées tant que le format des données biométriques à comparer ne change pas.

Pour chaque donnée biométrique de l'entité, au moins une valeur de correspondance entre ladite donnée biométrique et au moins une donnée biométrique de référence est ensuite déterminée E5 par le dispositif de calcul distant en évaluant le circuit arithmétique avec pour entrées la donnée biométriques de l'entité et la donnée biométrique de référence.

Pour chaque valeur de correspondance déterminée, le dispositif de calcul distant génère E6 une preuve de la correction de l'exécution du calcul de la valeur de correspondance, dite preuve générée, à partir de ladite représentation polynomiale, de la clé publique d'évaluation et du résultat de l'évaluation du circuit arithmétique. Il transmet E7 ensuite les valeurs de correspondance et lesdites preuves générées au dispositif client.

Ce dernier vérifie E8 alors les preuves reçues à l'aide de la clé de vérification publique. L'étape de vérification desdites preuves reçues E8 peut comprendre ou non une vérification de couplages par lot.

Enfin l'entité est identifiée F2 par le dispositif client en fonction des valeurs de correspondance et du résultat de ladite vérification de preuves.

Les entiers $u_i$ et $u_i'$ constituant les données de l'entité et les données de référence sont usuellement encodés sur un nombre de bits n bien inférieur à la taille q des valeurs des fils du circuit. A titre d'exemple le nombre de bits n peut être égal à 8 bits et la taille q peut être égale à 256 bits. Afin de limiter le nombre de multiplieurs nécessaires à la représentation de la fonction F sous forme d'un circuit arithmétique, plusieurs entiers $u_i$, respectivement $u_i'$ sont encodés sur chaque fil d'entrée du circuit arithmétique. La représentation de ladite fonction E1 comprend alors l'encodage d'un nombre entier k>1 d'entiers binaires d'un vecteur d'une donnée biométrique sur au moins un fil d'entrée du circuit. En pratique, l'encodage $E_k^{((j-1)k+1)}(u)$ ou $E_k^{((j-1)k+1)}(u')$ de k entiers binaires $u_i$ ou $u_i'$ sur un fil d'entrée d'un $j^{ème}$ opérateur de multiplication, $1 \le j \le N/k$, peut être défini par la formule :

$$E_k^{((j-1)k+1)}(x) = \sum_{i=1}^{k} 2^{\varepsilon_i} \cdot x_{(j-1)k+i} = 2^{\varepsilon_1} \cdot x_{(j-1)k+1} + \cdots + 2^{\varepsilon_k} \cdot x_{(j-1)k+k}$$

avec $\varepsilon_1, ..., \varepsilon_k$ des entiers prédéterminés.

Un multiplieur ayant en entrée $E_k^{((j-1)k+1)}(u)$ et $E_k^{((j-1)k+1)}(u')$ présente alors sur son fil de sortie le produit des encodages des k entiers binaires $u_i$ ou $u_i'$ successifs codés sur ses fils d'entrée. Ce produit est noté $E_{u \cdot u', k}^{((j-1)k+1)} = E_k^{((j-1)k+1)}(u) \cdot E_k^{((i-1)k+1)}(u')$. A titre d'exemple, pour j = 1, on a :

$$E_{u \cdot u', k}^{(1)} = 2^{2 \cdot \varepsilon_1} \cdot u_1 \cdot u_1' + 2^{\varepsilon_2} \cdot (u_1 \cdot u_2' + u_2 \cdot u_1') + 2^{2 \cdot \varepsilon_2} \cdot u_2 \cdot u_2' + \cdots \qquad + 2^{2 \cdot \varepsilon_k} \cdot u_k \cdot u_k'$$

Pour réduire davantage le nombre de multiplieurs du circuit arithmétique, le procédé mis en oeuvre propose également de séparer le calcul du produit scalaire de la donnée biométrique de l'entité u et de la donnée biométrique de référence u' de longueurs N en plusieurs calculs de produits scalaires de vecteurs de taille inférieure issus d'un fractionnement des vecteurs u et u'. La combinaison des résultats de ces produits scalaires permet alors d'obtenir le score S correspondant au résultat du produit scalaire de u et u'.

Pour cela, la fonction F comprenant au moins m produits scalaires, la fonction F peut être décomposée en au moins m occurrences de sous-fonctions, m étant un diviseur m de la longueur N des vecteurs de données biométriques. Seules les sous-fonctions distinctes sont alors représentées par leur propre sous-circuit dans le circuit arithmétique, diminuant ainsi le nombre de multiplieurs du circuit. Afin de combiner la décomposition du produit scalaire de u et u' en m sous-produits scalaires, et le codage de k entiers sur chaque fil d'entrée du circuit, il est possible de choisir k tel que k divise m. Le produit scalaire de u et u' peut alors être décomposé en m sous-produits scalaires de vecteurs de longueur N/km.

La somme des résultats de ces m produits scalaire permet d'obtenir un score encodé $\tilde{S}$ défini par la formule suivante :

$$\tilde{S} = \sum_{j=1}^{N/k} E_{u \cdot u', k}^{((j-1)k+1)}$$

$$= \sum_{j=1}^{N/k} \left( 2^{2 \cdot \varepsilon_1} \cdot \left( u_{(j-1)k+1} \cdot u_{(j-1)k+1}' \right) + 2^{\varepsilon_2} \cdot (...) + \cdots + 2^{2 \cdot \varepsilon_k} \cdot \left( u_{jk} \cdot u_{jk}' \right) \right)$$

et de la forme suivante si on déploie l'expression ci-dessus et que l'on rassemble les termes par puissance de 2 :

$\tilde{S} = 2^{2 \cdot \varepsilon_1} \cdot a_1 + 2^{\varepsilon_2} \cdot a_2' + 2^{2 \cdot \varepsilon_2} \cdot a_2 + 2^{\varepsilon_3} \cdot a_3' + \cdots + 2^{2 \cdot \varepsilon_k} \cdot a_k$ avec $a_i$ les termes en $2^{2 \cdot \varepsilon_i}$ rassemblant les produits d'entiers $u_i$ et $u_i'$ de mêmes indices utiles pour le calcul du produit scalaire et u et u', et avec $a_i'$ les termes en $2^{\varepsilon_2}, ..., 2^{\varepsilon_k}$ rassemblant les produits restants, produits croisés d'entiers $u_i$ et $u_j'$ d'indices différents inutiles pour le calcul du produit scalaire de u et u'.

Pour extraire le score S de sa version encodée $\tilde{S}$, il est possible d'extraire les k sous-termes correspondants aux coefficients $2^{2 \cdot \varepsilon_1}$, ..., $2^{2 \cdot \varepsilon_k}$ (c'est-à-dire les éléments $a_1$, $a_2$, ..., $a_k$), puis de les additionner.

Les paragraphes ci-dessous présentent les spécificités du procédé pour différentes plages de valeur du diviseur m. m peut être déterminé en réalisant un compromis entre les puissances de calcul du dispositif client et du dispositif de calcul distant ainsi que notamment des mémoires.

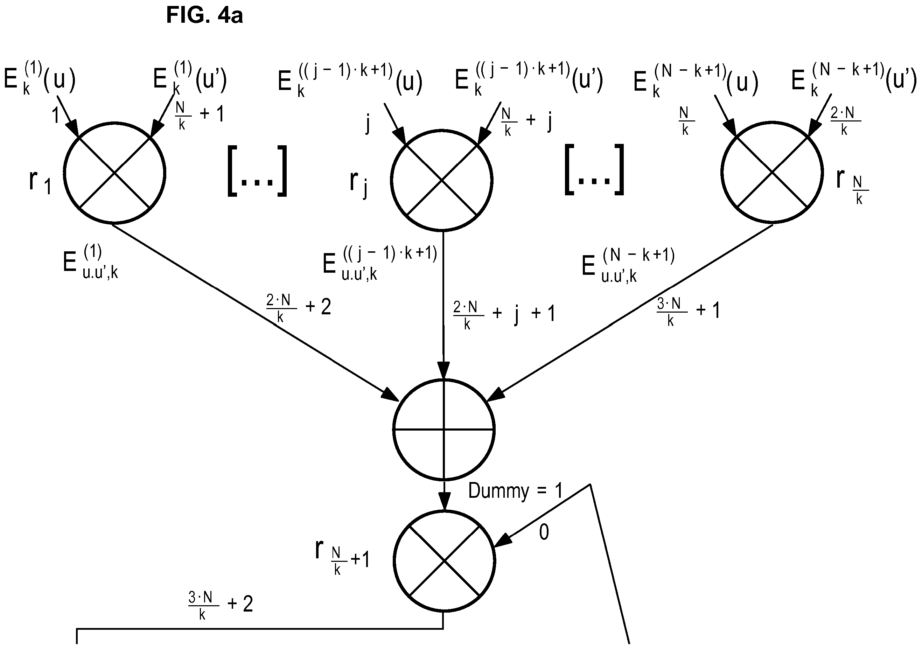

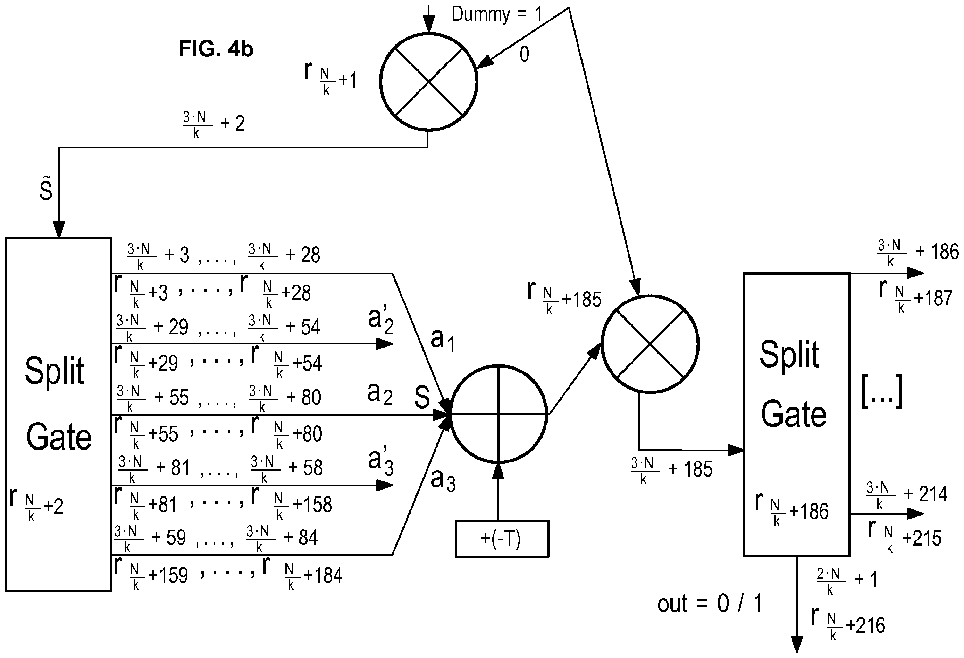

Dans un premier mode de mise en oeuvre dans lequel le diviseur m est égal à 1, la fonction F peut être mise sous la forme du circuit représenté en **figures 4a et 4b.** Un tel circuit comprend alors N/k multiplieurs d'entrée prenant chacun en entrée $E_k^{((j-1)k+1)}(u)$ et $E_k^{((j-1)k+1)}(u')$ avec $1 \leq j \leq N/k$. Sur les figures 4a et 4b, ces multiplieurs sont notés $r_j$ et les fils d'entrée sont numérotés de 1 à 2N/k. Les N/k fils de sortie des multiplieurs portent les valeurs $E_{u \cdot u',k}^{((j-1)k+1)}$ dont la somme est égale au score encodé $\tilde{S}$ décrit ci-dessus. Le circuit comporte un multiplieur de sortie supplémentaire, numéroté $r_{N/k+1}$, nécessaire à la conversion du circuit sous forme de QAP. Ce multiplieur multiplie la sortie du produit scalaire par 1 afin de ne pas modifier le score encodé $\tilde{S}$. Enfin, un séparateur (« Split gâte ») est employé afin d'extraire les coefficients $a_i$ avec $1 \leq i \leq k$ correspondant aux termes du produit scalaire u.u'. La sommation de ces termes d'abord séparés du score encodé puis reconstitués par multiplication par des puissances de deux et additionnés permet d'obtenir le score S. Les figures 4a et 4b correspondent à une mise en oeuvre dans laquelle le score est comparé au seuil prédéterminé T. La valeur (S-T) est alors calculée et fournie en entrée d'un deuxième séparateur afin d'extraire le bit de signe indiquant le résultat de la comparaison.

Plus précisément, on entendra par la suite par séparateur une porte arithmétique qui permet de séparer un entier bit par bit. Etant donné un entier $a \in \mathbb{Z}_q$ que l'on sait tenir sur $\tau$ bits, le séparateur contient un fil d'entrée (contenant l'entier $\alpha$) et $\tau$ fils de sortie. Sa définition, en termes de contraintes arithmétiques élémentaires, est donnée par exemple dans l'article Pinocchio cité, paragraphe 3.2. Elle est rappelée à titre indicatif. Notons ici $c_0$ le fil d'entrée et $c_1$, ..., $c_\tau$ les fils de sortie. Le circuit arithmétique de la porte dite « séparateur » est défini comme suit :

- la concaténation des bits en sortie est égale à l'entrée

$$\sum_{i=1}^{\tau} 2^{j-1} \cdot c_j = c_0$$

- chaque fil de sortie contient une valeur booléenne (0 ou 1) :

$$\forall i \in \{1, \dots, \tau\}: c_j \cdot (1 - c_j) = 0$$

Lorsqu'on utilise une porte « séparateur » au sein d'un circuit, l'entier est $\tau$ déterminé comme une borne supérieure atteinte étant donné la taille des entrées du circuit et l'ensemble des portes arithmétiques situées entre les entrées et le séparateur.

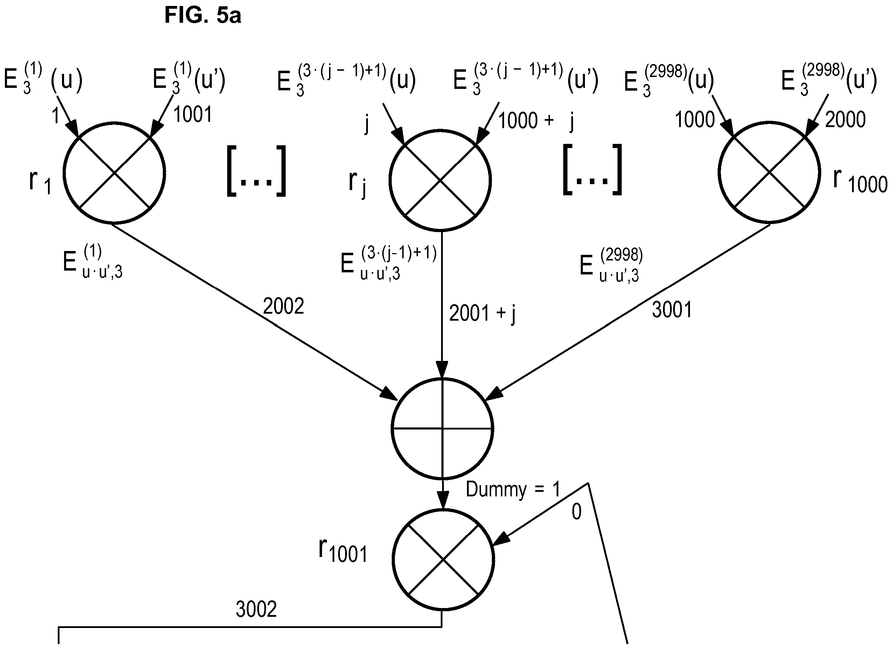

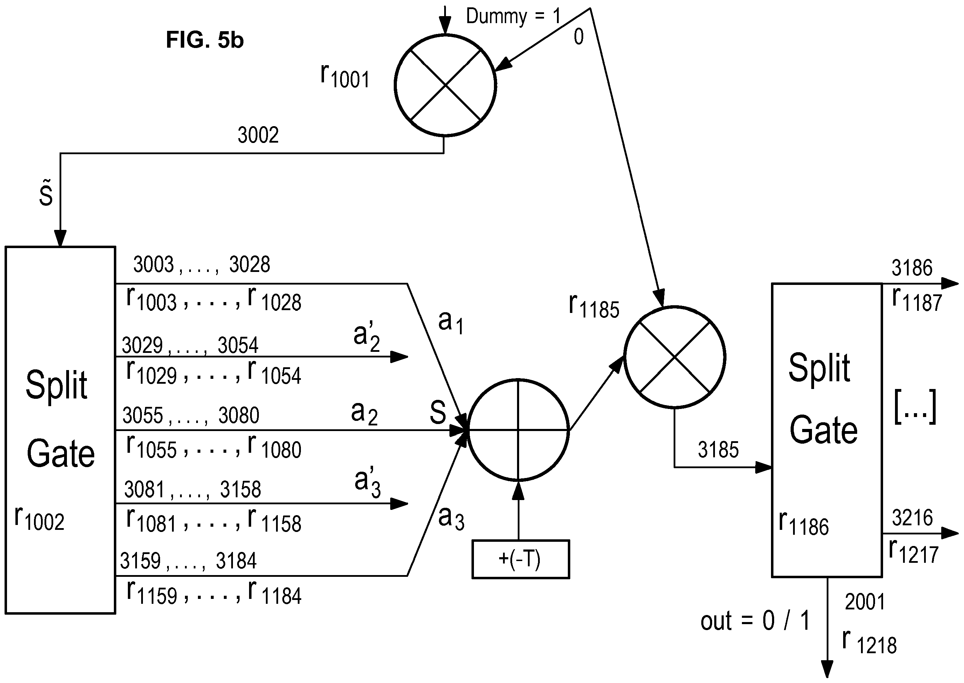

Un exemple de mise en oeuvre est représenté en **figures 5a et 5b** pour N = 3000, n = 8, q = 256, k = 3. Dans un tel mode de mise en oeuvre, les valeurs suivantes peuvent être utilisées pour les paramètres $\varepsilon_i$ : $\varepsilon_1 = 0$, $\varepsilon_2 = 26$, $\varepsilon_3 = 78$.

Dans un mode de mise en oeuvre qui ne relève pas de l'invention, le diviseur m est égal à 2 ou 3, la fonction F peut être décomposée en une fonction F1 calculant un sous-produit scalaire entre deux vecteurs de taille N/km, à utiliser m fois, et une fonction F2 calculant la somme de m valeurs, correspondant à un score codé, et réalisant l'extraction du score correspondant égal au produit scalaire recherché.

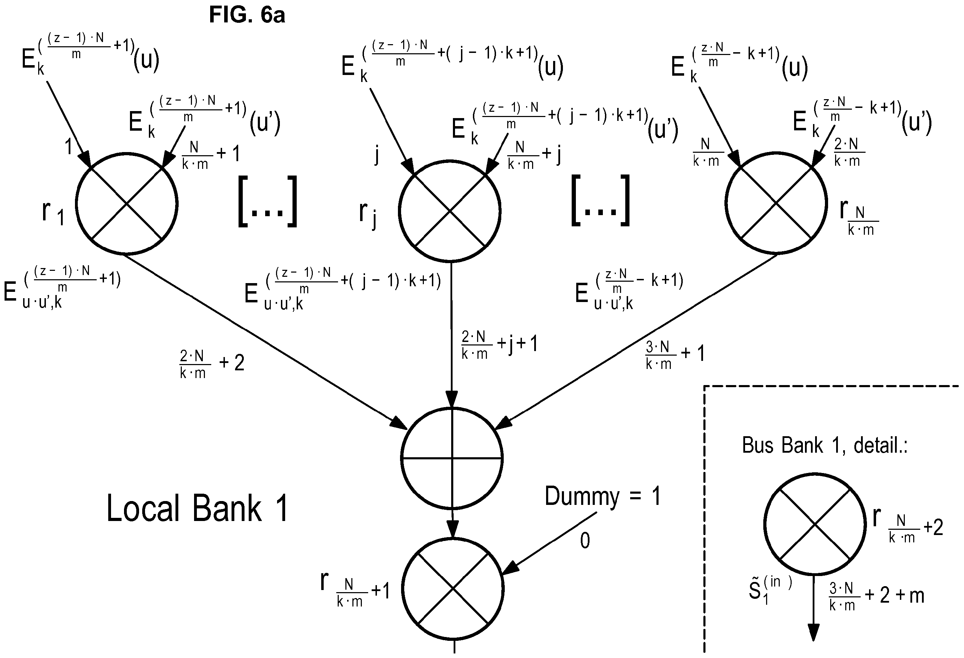

Comme représenté en **figures 6a à 6c,** le circuit correspondant comprend alors au moins N/km opérateurs de multiplication reliés aux fils d'entrée du circuit, une mémoire de stockage, et au moins un opérateur d'addition, et l'évaluation du circuit comprend itérativement un calcul de chacun des m produits scalaires à l'aide desdits N/km opérateurs de multiplication, un stockage des m résultats des calculs desdits produits scalaires dans ladite mémoire de stockage et une sommation desdits résultats à l'aide dudit opérateur d'addition.

Avec $F_1$ et $F_2$ ainsi définis, l'évaluation de la fonction $F$ correspond alors à $m$ applications de la fonction $F_1$ suivies d'une application de la fonction $F_2$. Le circuit représenté en figures 6a à 6c comprend ainsi N/km multiplieurs d'entrée prenant chacun en entrée, lors de l'itération z de la fonction F1, $E_k^{\left(\frac{(z-1)N}{m}+(j-1)k+1\right)}(u)$ et $E_k^{\left(\frac{(z-1)N}{m}+(j-1)k+1\right)}(u')$ avec $1 \leq j \leq N/km$. Sur les figures 6a à 6c, ces multiplieurs sont notés $r_j$ et les fils d'entrée sont numérotés de 1 à 2N/km.

Les m applications de la fonction $F_1$ permettent de calculer les sous-scores codés $\tilde{S}_z$ , pour $z \in \{1, \dots, m\}$ :

$$\tilde{S}_z = \sum_{j=1}^{N/k \cdot m} E_{u \cdot u', k}^{\left((z-1) \cdot (N/m) + (j-1) \cdot k + 1\right)}$$

A titre d'exemple, pour z = 1, on a :

$$\tilde{S}_1 = \sum_{j=1}^{N/k \cdot m} E_{u \cdot u', k}^{\left((j-1) \cdot k + 1\right)}$$

$$= \sum_{j=1}^{N/k \cdot m} \left( 2^{2 \cdot \varepsilon_1} \cdot \left(u_{(j-1)k+1} \cdot u'_{(j-1)k+1}\right) + 2^{\varepsilon_2} \cdot (\dots) + \cdots + 2^{2 \cdot \varepsilon_k} \right.$$
$$\left. \cdot \left(u_{jk} \cdot u'_{jk}\right) \right)$$

Les N/km fils de sortie des multiplieurs portent ainsi lors de l'itération z les valeurs $E_{u \cdot u', k}^{\left(\frac{(z-1)N}{m} + (j-1)k + 1\right)}$ dont la somme est égale au score encodé $\tilde{S}_z$ décrit ci-dessus. Le circuit comporte un multiplieur de sortie supplémentaire, numéroté $r_{N/km+1}$, nécessaire à la conversion du circuit sous forme de QAP. Les m sous-scores codés $\tilde{S}_z$, notés $\tilde{S}_z^{(out)}$ sur les figures 6a à 6c, sont stockés dans la mémoire de stockage correspondant aux m bus (« Bus Bank ») du procédé de calcul vérifiable. L'évaluation de la fonction F2, avec en entrée les m valeurs issues des bus, notées $\tilde{S}_z^{(in)}$ sur les figures 6a à 6c, permet d'obtenir le score codé $\tilde{S}$ décrit ci-dessus.

Comme dans le cas du circuit des figures 4a et 4b, un premier séparateur permet de récupérer les termes $a_i$ avec $1 \le i \le k$ correspondant aux termes du produit scalaire u.u'. La sommation de ces termes permet d'obtenir le score S qui est ensuite comparé au seuil prédéterminé T.

Selon une variante non représentée, la fonction F1 peut comprendre le décodage du sous-score codé $\tilde{S}_z$ obtenu lors de son évaluation en un sous-score $S_z$. Un tel décodage peut être réalisé de manière similaire au décodage du score codé $\tilde{S}$ présenté ci-dessus. La fonction F2 comprend alors uniquement la sommation des sous-scores $S_z$ pour obtenir le score S correspondant au produit scalaire u.u', selon la formule :

$$\sum_{z=1}^{m} S_z = \sum_{z=1}^{m} \left( \sum_{j=1}^{N/km} \left( \sum_{i=1}^{k} u_{(z-1) \cdot (N/m) + (j-1) \cdot k + i} \cdot u'_{(z-1) \cdot (N/m) + (j-1) \cdot k + i} \right) \right) = \sum_{z=1}^{N} u_z \cdot u'_z$$
$$= \langle u, u' \rangle = S$$

Dans un autre mode de mise en oeuvre qui ne relève pas de l'invention, le diviseur m est supérieur ou égal à 4, il est possible de décomposer la fonction F en une fonction $F_1$ et une fonction $F_2$, à utiliser alternativement et m fois au total, qui prennent chacune en entrée deux vecteurs de taille $N/km$ et un sous-score, et retournent en sortie un sous-score mis à jour défini comme la somme du sous-score donné en entrée avec le résultat du produit scalaire des vecteurs fournis en entrée ; et une fonction $F_3$ qui décode un score codé $\tilde{S}$ en un score S.

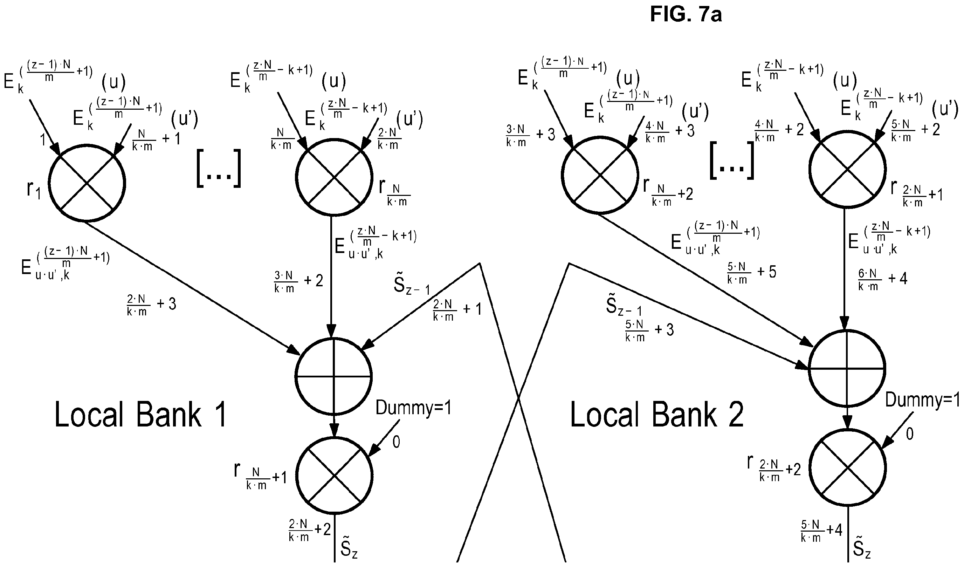

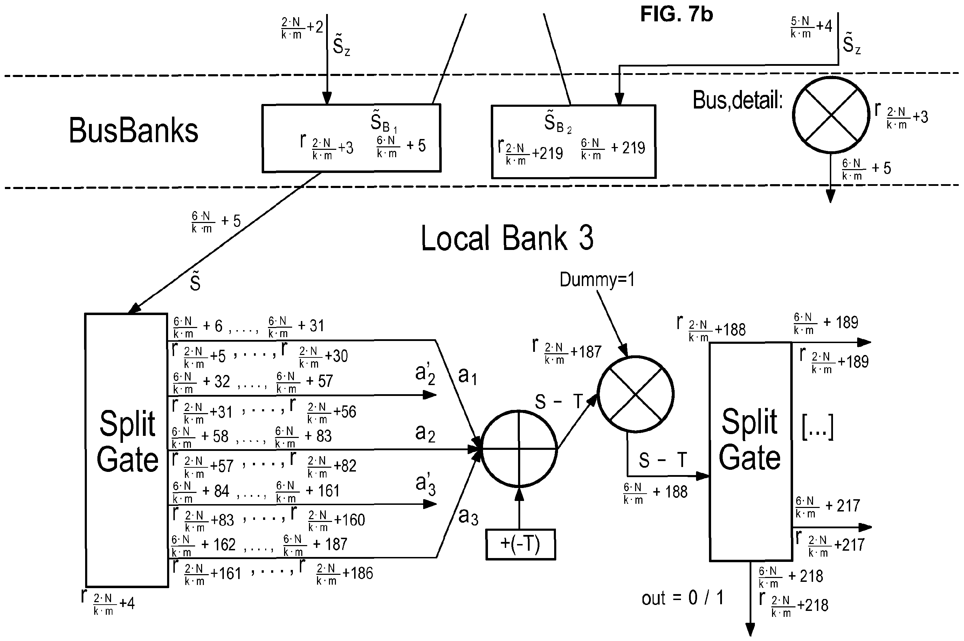

Comme représenté en **figures 7a et 7b,** le circuit comprend alors au moins un premier sous-circuit de calcul de produit scalaire comprenant N/km premiers opérateurs de multiplication reliés aux fils d'entrée du circuit, pour l'évaluation de la fonction F1 pour z impair, et une première mémoire de stockage, et un second sous-circuit de calcul de produit scalaire comprenant N/km seconds opérateurs de multiplication reliés aux fils d'entrée du circuit, pour l'évaluation de la fonction F2 pour z pair, et une seconde mémoire de stockage, chacun desdits sous-circuit étant également relié à une sortie de la mémoire de stockage de l'autre sous-circuit, et l'évaluation du circuit comprend itérativement un calcul de chacun des m produits scalaires en utilisant alternativement le premier ou le second sous-circuit pour calculer la somme du produit scalaire des valeurs des fils d'entrée de ce sous-circuit et de la valeur stockée dans la mémoire de stockage de l'autre sous-circuit.

Avec $F_1$, $F_2$ et $F_3$ ainsi définis, l'évaluation de la fonction $F$ correspond alors à m applications alternativement de la fonction $F_1$ et de la fonction $F_2$ suivies d'une application de la fonction $F_3$.

Le circuit représenté en figures 7a et 7b comprend ainsi deux ensembles de N/km multiplieurs d'entrée. Lors de l'itération z de la fonction F1 ou F2, les N/km multiplicateurs du sous-circuit concerné prennent alors chacun en entrée, $E_k^{\left(\frac{(z-1)N}{m}+(j-1)k+1\right)}(u)$ et $E_k^{\left(\frac{(z-1)N}{m}+(j-1)k+1\right)}(u')$ avec $1 \le j \le$ N/km. Sur les figures 7a et 7b, ces multiplieurs sont notés $r_j$ avec respectivement $1 \le j \le$ N/km et N/km $+2 \le j \le$ 2N/km +1. Les fils d'entrée sont numérotés respectivement de 1 à 2N/km et de 3N/km +3 à 5N/km +2.

Les m applications des fonctions $F_1$ et $F_2$ permettent de calculer les sous-scores codés $\tilde{S}_z$ , pour z e {1, ..., m} :

$$\tilde{S}_z = \sum_{\zeta=1}^{z} \sum_{j=1}^{N/k \cdot m} E_{u \cdot u',k}^{\left((\zeta-1)\cdot(N/m)+(j-1)\cdot k+1\right)}$$

Les N/km fils de sortie des multiplieurs d'un sous-circuit portent ainsi lors de l'itération z les valeurs $E_{u \cdot u',k}^{\left(\frac{(z-1)N}{m}+(j-1)k+1\right)}$ dont la somme, ajoutée au sous-score codé de l'itération précédente $\tilde{S}_{z-1}$, est égale au score encodé $\tilde{S}_z$ décrit ci-dessus. Le sous-score $\tilde{S}_0$ peut être par ailleurs initialisé à 0 lors de la première itération. Le score codé $\tilde{S}$ est ainsi construit itérativement, chaque itération ajoutant au sous-score issu de l'itération précédente le résultat du sous-produit scalaire courant $\sum_{j=1}^{N/k \cdot m} E_{u \cdot u',k}^{\left((z-1)\cdot(N/m)+(j-1)\cdot k+1\right)}$ .

Le circuit comporte un multiplieur de sortie supplémentaire pour chaque sous-circuit, numérotés $r_{N/km+1}$, $r_{2N/km+2}$ nécessaires à la conversion du circuit sous forme de QAP. Chaque sous-circuit stocke à l'issue de son évaluation les sous-scores codé $\tilde{S}_z$ calculé dans la mémoire de stockage correspondant à son bus (« Bus Bank ») r2$_{N/km+3}$, $r_{2N/km+219}$ dans le cadre du procédé de calcul vérifiable.

A l'issue des m itérations des fonctions F1 et F2, le score codé $\tilde{S}$ est ainsi stocké dans une des deux mémoires de stockage. Dans l'exemple des figures 7a et 7b, on suppose que m est impair. Le score codé $\tilde{S}$ est alors stocké dans la première mémoire de stockage. Lors de l'évaluation de la fonction F3, avec en entrée le score codé $\tilde{S}$ un premier séparateur permet de récupérer les termes $a_i$ avec $1 \le i \le k$ correspondant aux termes du produit scalaire u.u'. La sommation de ces termes permet d'obtenir le score S qui est ensuite comparé au seuil prédéterminé T.

Dans le cadre du procédé décrit ci-dessus les opérations à réaliser pour la génération des clés publiques d'évaluation et de vérification, et pour la génération et la vérification d'une preuve de calcul peuvent être dérivées des protocoles de calcul vérifiable existants tels que Pinocchio, quand m=1, et Geppetto, quand m>1. Les paragraphes ci-dessous décrivent plus en détail ces opérations en fonction de la valeur du diviseur m.

On comprendra que le mode de réalisation qui va être décrit est un mode de réalisation particulièrement avantageux qui n'est en rien limitatif. L'homme du métier saura utiliser d'autres façons de mettre en oeuvre la génération des clés publiques d'évaluation et de vérification, la génération et la vérification d'une preuve de calcul, et dériver lesdites opérations d'autres protocoles de calcul vérifiable existants.

_Cas m = 1 :_ Dans le premier mode de mise en oeuvre où m=1, un environnement bilinéaire asymétrique ($q$, $G_1$, $G_2$, $G_T$, $g_1$, $g_2$, $e$) est défini avec $q$ est un nombre premier, $G_1$, $G_2$ et $G_T$ trois groupes d'ordre $q$, $g_1$ un générateur de $G_1$, $g_2$ un générateur de $G_2$, et $e$ un couplage bilinéaire non-dégénéré $e$: $G_1 \times G_2 \to G_T$.

Le circuit arithmétique peut être représenté sous la forme d'une représentation polynomiale du circuit Q = ($t$, V, W, Y) de taille $\rho$ et de degré $\delta$, avec V={vi}, W={wi}, Y={yi}, $0 \le i \le \rho$.

Sont notés par la suite :

- $I_{io}$ = {1, ..., $\theta$} l'ensemble des indices correspondants aux fils d'entrée/sortie du circuit,
- $I_{mid}$ = {$\theta + 1$, ..., $\rho$} l'ensemble des indices des fils intermédiaires du circuit n'étant pas des fils d'entrée du circuit.

Lors de l'étape de génération E3 d'une clé publique d'évaluation et d'une clé publique de vérification, des aléas $r_v$, $r_w$, $s$, $\alpha_v$, $\alpha_w$, $\alpha_y$, $\beta$, $\gamma$ sont tout d'abord générés dans $\mathbb{Z}_q$ .

Puis les coefficients suivants sont définis : $r_y = r_v \cdot r_w$, $g_{v1} = g_1^{r_v}$, $g_{w1} = g_1^{r_w}$, $g_{w2} = g_2^{r_w}$, $g_{y1} = g_1^{r_y}$ et $g_{y2} = g_2^{r_y}$.

La <u>clé publique d'évaluation</u> $EK_F$ est ensuite générée comme égale à $(EK_{F1}, EK_{F2})$ où

$$EK_{F1} = \begin{pmatrix} \left\{g_{v1}^{v_i(s)}\right\}_{i \in I_{mid}}, \left\{g_{w1}^{w_i(s)}\right\}_{i \in I_{mid}}, \left\{g_{y1}^{y_i(s)}\right\}_{i \in I_{mid}}, \\ \left\{g_{v1}^{\alpha_v \cdot v_i(s)}\right\}_{i \in I_{mid}}, \left\{g_{w1}^{\alpha_w \cdot w_i(s)}\right\}_{i \in I_{mid}}, \left\{g_{y1}^{\alpha_y \cdot y_i(s)}\right\}_{i \in I_{mid}}, \\ \left\{g_1^{s^i}\right\}_{i \in [1,\delta]}, \left\{g_{v1}^{\beta \cdot v_i(s)} \cdot g_{w1}^{\beta \cdot w_i(s)} \cdot g_{y1}^{\beta \cdot y_i(s)}\right\}_{i \in I_{mid}} \end{pmatrix}$$

$$EK_{F2} = \left(\left\{g_{w2}^{w_i(s)}\right\}_{i \in I_{mid}}\right)$$

La <u>clé publique de vérification</u> $VK_F$ est également générée comme égale à $(VK_{F1}, VK_{F2})$ où :

$$VK_{F1} = \left(g_1, \left\{g_{v1}^{v_i(s)}\right\}_{i \in [1,\theta]}, \left\{g_{y1}^{y_i(s)}\right\}_{i \in [1,\theta]}\right)$$

$$VK_{F2} = \left(g_2, g_2^{\alpha_v}, g_2^{\alpha_w}, g_2^{\alpha_y}, g_2^{\gamma}, g_2^{\beta \cdot \gamma}, g_{y2}^{t(s)}, \left\{g_{w2}^{w_i(s)}\right\}_{i \in [1,\theta]}\right).$$

Le dispositif de calcul distant obtient E4 ensuite le circuit arithmétique, et la clé publique d'évaluation.

Pour chaque donnée biométrique de l'entité, au moins une valeur de correspondance entre la donnée biométrique de l'entité et au moins une donnée biométrique de référence peut alors être déterminée E5 par le dispositif de calcul distant en évaluant le circuit arithmétique reçu à partir des données biométriques de l'entité et de référence. L'ensemble des valeurs du circuit $\{c_i\}_{i \in [1,\rho]}$ peut alors être obtenu.

La génération E6 par le dispositif de calcul distant, pour chaque valeur de correspondance déterminée, d'une preuve de la correction de l'exécution du calcul de la valeur de correspondance, dite <u>preuve générée</u> $\pi = (\pi_1, \pi_2)$ peut comprendre alors :

- la détermination d'un polynôme $h(x)$ tel que $p(x) = h(x) \cdot t(x)$ avec

$$p(x) = \left(v_0(x) + \sum_{i=1}^{\rho} c_i \cdot v_i(x)\right) \cdot \left(w_0(x) + \sum_{i=1}^{\rho} c_i \cdot w_i(x)\right) - \left(y_0(x) + \sum_{i=1}^{\rho} c_i \cdot y_i(x)\right),$$

- le calcul de :

$$\pi_1 = \begin{pmatrix} g_{v1}^{v_{mid}(s)}, g_{w1}^{w_{mid}(s)}, g_{y1}^{y_{mid}(s)}, g_1^{h(s)}, \\ g_{v1}^{\alpha_v \cdot v_{mid}(s)}, g_{w1}^{\alpha_w \cdot w_{mid}(s)}, g_{y1}^{\alpha_y \cdot y_{mid}(s)}, \\ g_{v1}^{\beta \cdot v_{mid}(s)} \cdot g_{w1}^{\beta \cdot w_{mid}(s)} \cdot g_{y1}^{\beta \cdot y_{mid}(s)} \end{pmatrix} \text{ et } \pi_2 = \left(g_{w2}^{w_{mid}(s)}\right)$$

où : $v_{mid}(x) = \Sigma_{i \in I_{mid}} c_i \cdot v_i(x)$, $w_{mid}(x) = \Sigma_{i \in I_{mid}} c_i \cdot w_i(x)$ et

$$y_{mid}(x) = \sum_{i \in I_{mid}} c_i \cdot y_i(x).$$

Le dispositif de calcul distant transmet E7 ensuite les valeurs de correspondance et lesdites preuves générées au dispositif client.

Les preuves reçues par le dispositif client sont de la forme $(\pi_{r1}, \pi_{r2})$ avec : $\pi_{r1}$ sous la forme : $(g_{v1}^{V_{mid}}, g_{w1}^{W_{mid}}, g_{y1}^{Y_{mid}}, g_1^H, g_{v1}^{V'_{mid}}, g_{w1}^{W'_{mid}}, g_{y1}^{Y'_{mid}}, g_1^Z)$ et $\pi_{r2}$ sous la forme $g_{w2}^{W_{mid}}$.

Le dispositif client vérifie E8 ensuite chaque preuve reçue $(\pi_{r1}, \pi_{r2})$ en mettant en oeuvre les tests d'égalité suivants :

-

$$e\left(g_{v1}^{v_0(s)} \cdot g_{v1}^{v_{io}(s)} \cdot g_{v1}^{V_{mid}}, g_{w2}^{w_0(s)} \cdot g_{w2}^{w_{io}(s)} \cdot g_{w2}^{W_{mid}}\right) =$$

$$e\left(g_1^H, g_{y2}^{t(s)}\right) \cdot e\left(g_{y1}^{y_0(s)} \cdot g_{y1}^{y_{io}(s)} \cdot g_{y1}^{Y_{mid}}, g_2\right),$$

- $$e\left(\left(g_{v1}{}^{V'mid}\right)^{d_1} \cdot \left(g_{w1}{}^{W'mid}\right)^{d_2} \cdot \left(g_{y1}{}^{Y'mid}\right)^{d_3}, g_2\right) = e\left(\left(g_{v1}{}^{Vmid}\right)^{d_1}, g_2{}^{\alpha_v}\right) \cdot$$
$$e\left(\left(g_{w1}{}^{Wmid}\right)^{d_2}, g_2{}^{\alpha_w}\right) \cdot e\left(\left(g_{y1}{}^{Ymid}\right)^{d_3}, g_2{}^{\alpha_y}\right),$$

- $$e\left(g_1{}^{Z}, g_2{}^{Y}\right) = e\left(g_{v1}{}^{Vmid} \cdot g_{w1}{}^{Wmid} \cdot g_{y1}{}^{Ymid}, g_2{}^{\beta \cdot \gamma}\right)$$

où $g_{v1}{}^{v_{io}(s)} = \prod_{i=1}^{\theta}\left(g_{v1}{}^{v_i(s)}\right)^{c_i}$, $\quad g_{w2}{}^{w_{io}(s)} = \prod_{i=1}^{\theta}\left(g_{w2}{}^{w_i(s)}\right)^{c_i}$ et $g_{y1}{}^{y_{io}(s)} = \prod_{i=1}^{\theta}\left(g_{y1}{}^{y_i(s)}\right)^{c_i}$ et ($d_1$, $d_2$, $d_3$) des éléments de $\mathbb{Z}_q$ sur $\lambda$ bits avec $\lambda$ un paramètre de sécurité. Dans ce mode de mise en oeuvre, l'étape de vérification desdites preuves reçues comprend donc une vérification de couplages par lot.

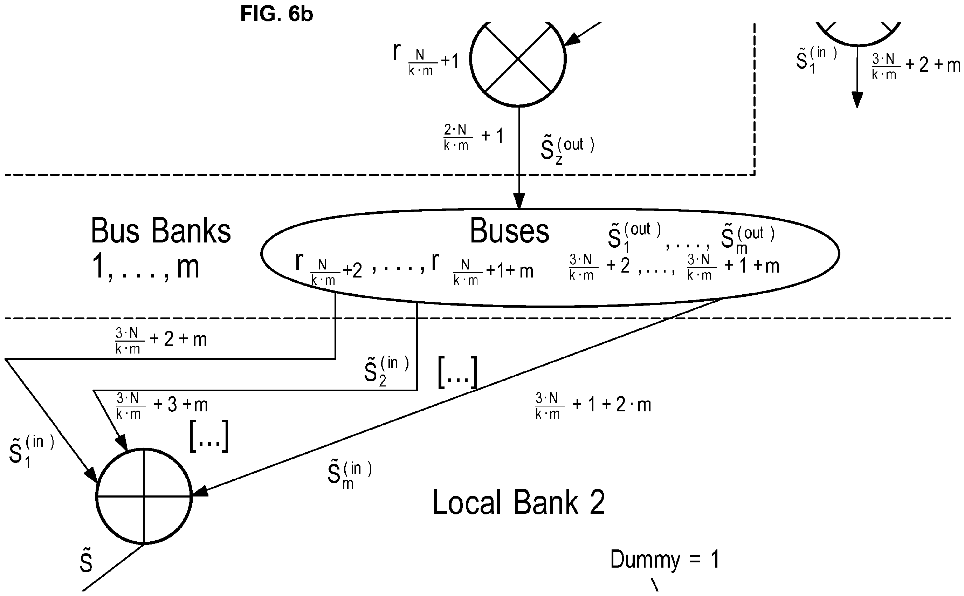

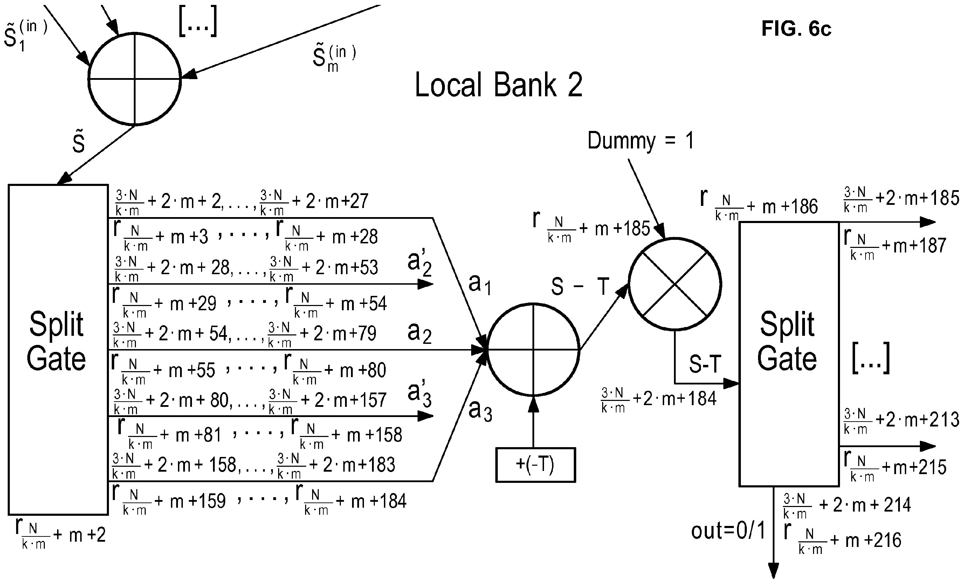

_Cas m > 1 :_ On appelle banque B un sous-ensemble des indices [1, ρ] (autrement dit un sous-ensemble des fils du circuit) et une instance d'une banque B est un ensemble de valeurs pour ces indices (par exemple notés $[c_j]_{j \in B}$).
La fonction F est découpée en $\omega$ sous-fonctions $F_1, ... , F_{\omega}$. Par exemple dans le cas des figures 6 et 7(qui ne correspondent pas à l'invention) on peut choisir respectivement $\omega = 2$ et $\omega = 3$ comme décrit ci-dessus.
On définit $\sigma = ((f_l, (T_{l1}, ... , T_{l\ell})))_{l \in [1,L]}$ un ordonnancement de longueur L avec $f_l \in \{1, ..., \omega\}$ l'indice de la fonction à calculer.
A titre d'exemple, dans le cas m = 2 ou m = 3 décrit ci-dessus en référence aux figures 6a à 6c, L=m+1 et la fonction F est séparée en deux fonctions $F_1, F_2$.
Les banques utilisées sont : ($B_{io}$, $B_{L_1}$, $B_{L_2}$, $B_{B_1}$, ..., $B_{B_m}$) où :

- $B_{io}$ : banques de type entrée/sortie. Nombre d'instances : $m + 1$
- $B_{L_1}$ : banque de type local pour F1. Nombre d'instances : $m$
- $B_{L_2}$ : banque de type local pour F2. Nombre d'instance : 1
- $B_{B_1}, ... , B_{B_m}$ : banques de type bus. Une instance de chaque.

L'ordonnancement des preuves, de longueur m + 1, est :

$$\sigma = \left(\left(1, (1,1,0,1,0,...0)\right), ..., \left(1, (m, m, 0, ...,1)\right), \left(2, (m + 1, 0, 1, ...,1)\right)\right)$$

Autrement dit, l'ordonnancement des preuves est :

- Pour $l \in \{1, ... , m\}$ : digest de $B_{L_1}{}^{(l)}$, mise en gage de $B_{B_1}$, preuve avec $B_{L_1}{}^{(l)}$, entrées $B_{io}{}^{(l)}$, et bus $B_{Bl}$
- Pour $l = m + 1$ : digest de $B_{L_2}$, preuve avec $B_{L_2}$, entrées $B_{io}{}^{(l)}$, et tous les bus $B_{B_1}, ... , B_{B_m}$.

A titre d'exemple, dans le cas m ≥ 4 décrit ci-dessus en référence aux figures 7a et 7b, la fonction F est séparée en trois fonctions $F_1, F_2, F_3$.
Les banques utilisées sont : ($B_{io}$, $B_{L_1}$, $B_{L_2}$, $B_{L_3}$, $B_{B_1}$, $B_{B_2}$) où :

- $B_{io}$ : banques de type entrée/sortie. Nombre d'instances : m + 1
- $B_{L_1}$ : banque de type local pour $F_1$. Nombre d'instances : $\lceil m/2 \rceil$
- $B_{L_2}$ : banque de type local pour $F_2$. Nombre d'instance : $\lfloor m/2 \rfloor$
- $B_{L_3}$ : banque de type local pour $F_3$. Nombre d'instance : 1
- $B_{B_1}, B_{B_2}$ : banques de type bus. $\lceil m/2 \rceil$ instances de la première $\lfloor m/2 \rfloor$ instances de la seconde.

L'ordonnancement des preuves, de longueur m + 1, est :

$$\sigma = (\sigma_1, \sigma_2, \ldots, \sigma_m, \sigma_{m+1})$$

où :

- Pour $l \in \{1, \ldots, m\}$ :

  o Si $l$ impair : digest de $B_{L_1}^{(\lceil l/2 \rceil)}$, mise en gage de $B_{B_1}$, preuve avec $B_{L_1}^{(\lceil l/2 \rceil)}$, entrées $B_{io}^{(l)}$, et bus $B_{B_1}$.

  $$\sigma_l = \left(1, \left(l, \lceil l/2 \rceil, 0, 0, \lceil l/2 \rceil, \lceil l/2 \rceil - 1\right)\right)$$

  ○ Si $l$ pair : digest de $B_{L_2}^{(\lceil l/2 \rceil)}$, mise en gage de $B_{B_2}$, preuve avec $B_{L_2}^{(\lceil l/2 \rceil)}$, entrées $B_{io}^{(l)}$, et bus $B_{B_2}$.

  $$\sigma_l = \left(2, \left(l, 0, \lceil l/2 \rceil, 0, \lceil l/2 \rceil - 1, \lceil l/2 \rceil\right)\right)$$

- Pour $l = m + 1$ : digest de $B_{L_3}$, preuve avec $B_{L_3}$, entrées $B_{io}^{(l)}$, et la banque de bus $B_{B_1}$ (si m est impair) ou $B_{B_2}$ (sinon).

$$\sigma_l = \left(3, \left(m + 1, 0, 0, 1, \lceil l - 1/2 \rceil, 0\right)\right) \text{ ou } \sigma_l = \left(3, \left(m + 1, 0, 0, 1, 0, \lceil l - 1/2 \rceil\right)\right).$$

Pour un nombre x la notation $\lceil x/2 \rceil$ (respectivement $\lfloor x/2 \rfloor$) désigne l'entier naturel supérieur ou égal (respectivement inférieur ou égal) à la valeur rationnelle $x/2$.

Pour plus d'informations concernant l'utilisation des banques et d'un tel ordonnancement, les paragraphes ci-dessous peuvent être lus à la lumière de la publication référencée ci-dessus décrivant le protocole Geppetto dont le protocole présenté ci-dessous est dérivé.

Dans les modes de mise en oeuvre des figures 6a à 6c et 7a à 7c, un environnement bilinéaire asymétrique $(q, G_1, G_2, G_T, g_1, g_2, e)$ est défini avec $q$ est un nombre premier, $G_1$, $G_2$ et $G_T$ trois groupes d'ordre $q$, $g_1$ un générateur de $G_1$, $g_2$ un générateur de $G_2$, et e un couplage bilinéaire non-dégénéré $e: G_1 \times G_2 \to G_T$.

Le circuit arithmétique peut être représenté sous la forme d'un multi-QAP $Q = (\{B_b\}_{b \in [1, \ell]}, t, V, W, Y)$ de taille $\rho$ et de degré $\delta$, avec $\{B_b\}_{b \in [1, \ell]}$ un ensemble de $\ell$ banques $B_b$ de Q utilisées dans le calcul de la fonction F, et V={vi}, W={wi}, Y={yi} avec $0 \le i \le \rho$.

Lors de l'étape de génération E3 par le dispositif client d'une clé publique d'évaluation et d'une clé publique de vérification, des aléas $s, \{(\alpha_{bv}, \alpha_{bw}, \alpha_{by}, \beta_b, \gamma_b)\}_{b \in [1, \ell]}, r_v, r_w$ sont générés dans $\mathbb{Z}_q$.

Puis les coefficients suivants sont définis : $r_y = r_v \cdot r_w$, $g_{v1} = g_1^{r_v}$, $g_{v2} = g_2^{r_v}$, $g_{w1} = g_1^{r_w}$, $g_{w2} = g_2^{r_w}$, $g_{y1} = g_1^{r_y}$ et $g_{y2} = g_2^{r_y}$.

La clé publique d'évaluation $EK_F$ est alors générée comme égale à :

$$\left(\{EK_{Fb}\}_{b \in [1, \ell]}, \left\{g_1^{s^i}\right\}_{i \in [1, \delta]}, g_{v1}^{t(s)}, g_{w1}^{t(s)}, g_{y1}^{t(s)}, g_{v2}^{t(s)}, g_{w2}^{t(s)}, g_{y2}^{t(s)}\right).$$

Chaque clef publique de banque $EK_{Fb}$ est égale à $(EK_{Fb1}, EK_{Fb2})$ et générée en calculant :

$$EK_{Fb1} = \left(\begin{array}{l} \left\{\begin{array}{l} g_{v1}^{v_i(s)}, g_{w1}^{w_i(s)}, g_{y1}^{y_i(s)}, g_{v1}^{\alpha_{bv} \cdot v_i(s)}, g_{w1}^{\alpha_{bw} \cdot w_i(s)}, g_{y1}^{\alpha_{by} \cdot y_i(s)}, \\ g_{v1}^{\beta_b \cdot v_i(s)} \cdot g_{w1}^{\beta_b \cdot w_i(s)} \cdot g_{y1}^{\beta_b \cdot y_i(s)} \end{array}\right\}_{i \in B_b}, \\ g_{v1}^{\alpha_{bv} \cdot t(s)}, g_{w1}^{\alpha_{bw} \cdot t(s)}, g_{y1}^{\alpha_{by} \cdot t(s)}, g_{v1}^{\beta_b \cdot t(s)}, g_{w1}^{\beta_b \cdot t(s)}, g_{y1}^{\beta_b \cdot t(s)} \end{array}\right)$$

$$EK_{Fb2} = \left( \left\{ g_{w2}{}^{w_i(s)} \right\}_{i \in B_b}, g_{w2}{}^{\alpha_{bw} \cdot t(s)} \right).$$

La clé publique de vérification $VK_F$ est également générée comme égale à : $(\{VK_{Fb}\}_{b \in [1,\ell]}, g_1, g_2, g_{y2}{}^{t(s)})$. Chaque clef publique de banque $VK_{Fb}$ est égale à $(g_2{}^{\alpha_{bv}}, g_2{}^{\alpha_{bw}}, g_2{}^{\alpha_{by}}, g_2{}^{\gamma_b}, g_2{}^{\beta_b \cdot \gamma_b})$.

Le dispositif de calcul distant obtient E4 le circuit arithmétique et la clé publique d'évaluation.

Pour chaque donnée biométrique de l'entité, au moins une valeur de correspondance entre ladite donnée biométrique et au moins une donnée biométrique de référence peut alors être déterminée E5 par le dispositif de calcul distant en évaluant le circuit arithmétique reçu à partir des données biométriques de l'entité et de référence. Le dispositif de calcul distant évalue chaque sous fonction $F_\omega$ à partir des données biométriques de l'entité et de référence pour obtenir la valeur de correspondance et les valeurs du circuit.

La génération E6 par le dispositif de calcul distant, pour chaque valeur de correspondance déterminée, d'une preuve de la correction de l'exécution du calcul de la valeur de correspondance peut comprendre pour chaque $l = \{1, \ldots, L\}$ une liste de digests et de preuves obtenus comme décrits ci-dessous.

Soit $\Lambda \subseteq [1, \ell]$ l'ensemble des indices $b \in [1, \ell]$ tels que $T_{lb} \neq 0$ dans l'ordonnancement $\sigma = ((f_l, (T_{l1}, \ldots, T_{l\ell})))_{\ell \in [1,L]}$.

On note par la suite : $\Gamma = \cup_{b \in \Lambda} B_b$, $\{c_j\}_{j \in B_b}$ une instance de la banque $B_b$ et $\Delta = \{c_i\}_{i \in \Gamma}$ l'ensemble des valeurs de $\Gamma$.

Pour chaque banque $B_b$ telle que $b \in \Lambda$,

- le dispositif de calcul distant génère des aléas de mises en gage $o_b = (o_{bv}, o_{bw}, o_{by})$ dans $\mathbb{Z}_q$.
- il calcule ensuite le digest $D_b$ égal à $(D_{b1}, D_{b2})$ à partir de l'instance de la banque de variables $B_b$ : $B_b{}^{(T_{lb})} = \{c_i \in \Delta\}_{i \in B_b}$ et des aléas de mise en gage $o_b$. De tels digests sont tels que :

o si la banque $B_b$ est une banque d'entrée/sortie : $D_{b1} = (g_{vl1}{}^{v(b)(s)}, g_{y1}{}^{y(b)(s)})$ et $D_{b2} = (g_{w2}{}^{w(b)(s)})$,

∘ si la banque $B_b$ n'est pas une banque d'entrée/sortie :

$$D_{b1} = \left( \begin{array}{c} g_{v1}{}^{v(b)(s)}, g_{w1}{}^{w(b)(s)}, g_{y1}{}^{y(b)(s)}, g_{v1}{}^{\alpha_{bv} \cdot v(b)(s)}, g_{w1}{}^{\alpha_{bw} \cdot w(b)(s)}, g_{y1}{}^{\alpha_{by} \cdot y(b)(s)}, \\ g_{v1}{}^{\beta_b \cdot v(b)(s)} \cdot g_{w1}{}^{\beta_b \cdot w(b)(s)} \cdot g_{y1}{}^{\beta_b \cdot y(b)(s)} \end{array} \right)$$

$$D_{b2} = \left( g_{w2}{}^{w(b)(s)} \right)$$

avec :

$$v^{(b)}(s) = \sum_{i \in B_b} c_i \cdot v_i(s) + o_{bv} \cdot t(s),$$

$$w^{(b)}(s) = \sum_{i \in B_b} c_i \cdot w_i(s) + o_{bw} \cdot t(s),$$

$$y^{(b)}(s) = \sum_{i \in B_b} c_i \cdot y_i(s) + o_{by} \cdot t(s).$$

Le dispositif de calcul distant détermine ensuite un polynôme $h^{(l)}(x)$ tel que $p^{(l)}(x) = h^{(l)}(x) \cdot t(x)$ avec $p^{(l)}(x) = (v_0(x) + \Sigma_{i \in \Gamma} c_i \cdot v_j(x) + \Sigma_{b \in \Lambda} o_{bv} \cdot t(x)) \cdot (w_0(x) + \Sigma_{i \in \Gamma} c_i \cdot w_j(x) + \Sigma_{b \in \Lambda} o_{bw} \cdot t(x)) - (y_0(x) + \Sigma_{i \in \Gamma} c_i \cdot y_j(x) + \Sigma_{b \in \Lambda} o_{by} \cdot t(x))$

Enfin, il calcule un élément de preuve $\pi^{(l)}$ égal à $g_1{}^{h(l)(s)}$.

Le dispositif de calcul distant transmet E7 ensuite les valeurs de correspondance et lesdites preuves générées comprenant la liste de digests et d'éléments de preuve calculés au dispositif client.

Les preuves reçues par le dispositif client sont de la forme :
$D_1{}^{(1)}, \ldots, D_\ell{}^{(1)}, \pi^{(1)}, \ldots, D_1{}^{(L)}, \ldots, D_\ell{}^{(L)}, \pi^{(L)}$ où pout tout $l \in \{1, \ldots, L\}$ et e $\{1, \ldots, \ell\}$ :

$$D_b{}^{(l)} = \left( \left( g_{v1}^{V_b{}^{(l)}}, g_{w1}^{W_b{}^{(l)}}, g_{y1}^{Y_b{}^{(l)}}, g_{v1}^{V_b'{}^{(l)}}, g_{w1}^{W_b'{}^{(l)}}, g_{y1}^{Y_b'{}^{(l)}}, g_1^{Z_b{}^{(l)}} \right), \left( g_{w2}^{W_b{}^{(l)}} \right) \right)$$

et

$$\pi^{(l)} = g_1^{H^{(l)}}.$$

Deux variantes de mise en oeuvre de vérification de la preuve reçue E8 sont explicitées ci-dessous.

Dans une première variante de mise en oeuvre, le dispositif client vérifie ensuite chaque preuve reçue en mettant en oeuvre :

- une vérification des $L \cdot \ell$ digests, pour $1 \in \{1, ..., L\}$ et $b \in \{1, ..., f\}$ comprenant les tests d'égalité suivants :

  ○

$$e\left( g_{v1}^{V_b'{}^{(l)}}, g_2{}^{\alpha_{bv}} \right) = e\left( g_{v1}^{V_b{}^{(l)}}, g_2 \right)$$

  ○

$$e\left( g_{w1}^{W_b'{}^{(l)}}, g_2{}^{\alpha_{bw}} \right) = e\left( g_{w1}^{W_b{}^{(l)}}, g_2 \right)$$

  ○

$$e\left( g_{y1}^{Y_b'{}^{(l)}}, g_2{}^{\alpha_{by}} \right) = e\left( g_{y1}^{Y_b{}^{(l)}}, g_2 \right)$$

  ○

$$e\left( g_1^{Z_b{}^{(l)}}, g_2{}^{\gamma_b} \right) = e\left( g_{v1}^{V_b{}^{(l)}} \cdot g_{w1}^{W_b{}^{(l)}} \cdot g_{y1}^{Y_b{}^{(l)}}, g_2{}^{\beta_b \cdot \gamma_b} \right)$$

- une vérification des $L$ preuves comprenant pour $1 \in \{1, ..., L\}$ le test d'égalité suivant :

$$e\left( \prod_{b=1}^{\ell} \left( g_{v1}^{V_b{}^{(l)}} \right), \prod_{b=1}^{\ell} \left( g_{w2}^{W_b{}^{(l)}} \right) \right) = e\left( g_1^{H^{(l)}}, g_{y2}{}^{t(s)} \right) \cdot e\left( \prod_{b=1}^{\ell} \left( g_{y1}^{Y_b{}^{(l)}} \right), g_2 \right)$$

Dans une deuxième variante de mise en oeuvre, le dispositif client vérifie ensuite chaque preuve reçue en mettant en oeuvre une vérification par lot (« batch vérification ») comprenant, étant donné un paramètre de correction $\lambda$ :

- une sélection d'un vecteur aléatoire $(d_1, ..., d_{3 \cdot \ell})$ d'éléments de taille $\lambda$,
- une vérification par lot les $L \cdot \ell$ digests, en $\ell$ fois en mettant en oeuvre les tests d'égalité suivants, pour $b \in \{1, ..., \ell\}$ :

  ○

$$e\left(\prod_{l=1}^{L}\left(g_{v1}^{V_b'^{(l)}}\right)^{d_l}, g_2{}^{\alpha_{bv}}\right) \cdot e\left(\prod_{l=1}^{L}\left(g_{w1}^{W_b'^{(l)}}\right)^{d_{L+l}}, g_2{}^{\alpha_{bw}}\right) \cdot$$

$$e\left(\prod_{l=1}^{L}\left(g_{y1}^{Y_b'^{(l)}}\right)^{d_{2\cdot L+l}}, g_2{}^{\alpha_{by}}\right) = e\left(\prod_{l=1}^{L}\left(g_{v1}^{V_b^{(l)}}\right)^{d_l} \cdot \prod_{l=1}^{L}\left(g_{w1}^{W_b^{(l)}}\right)^{d_{L+l}} \cdot\right.$$

$$\left. \prod_{l=1}^{L}\left(g_{y1}^{Y_b^{(l)}}\right)^{d_{2\cdot L+l}}, g_2\right)$$

○

$$e\left(\prod_{l=1}^{L}\left(g_1^{Z_b^{(l)}}\right)^{d_l}, g_2{}^{\gamma_b}\right) = e\left(\prod_{l=1}^{L}\left(g_{v1}^{V_b^{(l)}} \cdot g_{w1}^{W_b^{(l)}} \cdot g_{y1}^{Y_b^{(l)}}\right)^{d_l}, g_2{}^{\beta_b \cdot \gamma_b}\right)$$

- une vérification par lot les L preuves en mettant en oeuvre le test d'égalité suivant:

$$\prod_{l=1}^{L} e\left(\prod_{b=1}^{\ell}\left(g_{v1}^{V_b^{(l)}}\right)^{d_l}, \prod_{b=1}^{\ell}\left(g_{w2}^{W_b^{(l)}}\right)\right) =$$

$$e\left(\prod_{l=1}^{L}\left(g_1^{H^{(l)}}\right)^{d_l}, g_{y2}{}^{t(s)}\right) \cdot e\left(\prod_{l=1}^{L}\prod_{b=1}^{\ell}\left(g_{y1}^{Y_b^{(l)}}\right)^{d_l}, g_2\right) ,$$

- et en option une vérification de l'appartenance des éléments sur lesquels les couplages s'appliquent à leurs groupes respectifs.

Le procédé mis en oeuvre permet ainsi de réaliser une identification biométrique en comparant des données biométriques dans le cadre d'un protocole de calcul publiquement vérifiable tout en minimisant le temps nécessaire à la production et à la vérification des preuves relatives à la bonne exécution de ce calcul, grâce à la minimisation du nombre de multiplieurs employés pour représenter ce calcul sous forme de circuit arithmétique.

- $B_{B_1}, \ldots, B_{B_m}$ : banques de type bus. Une instance de chaque.

L'ordonnancement des preuves, de longueur m + 1, est :

$$\sigma = \Big(\big(1, (1,1,0,1,0,\ldots 0)\big), \ldots, \big(1, (m, m, 0, \ldots, 1)\big), \big(2, (m + 1, 0, 1, \ldots, 1)\big)\Big)$$

Autrement dit, l'ordonnancement des preuves est :

- Pour $l \in \{1, \ldots, m\}$ : digest de $B_{L1}^{(l)}$, mise en gage de $B_{Br}$ preuve avec $B_{L1}^{(l)}$, entrées $B_{io}^{(l)}$, et bus $B_{Br}$
- Pour $l = m + 1$ : digest de $B_{L2}$, preuve avec $B_{L2}$, entrées $B_{io}^{(l)}$, et tous les bus $B_{B_1}, \ldots, B_{B_m}$.

A titre d'exemple, dans le cas $m \geq 4$ décrit ci-dessus en référence aux figures 7a et 7b, la fonction F est séparée en trois fonctions $F_1$, $F_2$, $F_3$.
Les banques utilisées sont : $(B_{io}, B_{L_1}, B_{L_2}, B_{L_3}, B_{B_1}, B_{B_2})$ où :

- $B_{io}$ : banques de type entrée/sortie. Nombre d'instances : $m + 1$
- $B_{L_1}$ : banque de type local pour $F_1$. Nombre d'instances : $\left\lceil m/2 \right\rceil$
- $B_{L_2}$ : banque de type local pour $F_2$. Nombre d'instance : $\left\lfloor m/2 \right\rfloor$
- $B_{L_3}$ : banque de type local pour $F_3$. Nombre d'instance : 1
- $B_{B_1}$, $B_{B_2}$ : banques de type bus. $\left\lceil m/2 \right\rceil$ instances de la première $\left\lfloor m/2 \right\rfloor$ instances de la seconde.

L'ordonnancement des preuves, de longueur m + 1, est :

$$\sigma = (\sigma_1, \sigma_2, \dots, \sigma_m, \sigma_{m+1})$$

où :

- Pour $l \in \{1, \dots, m\}$ :
  - Si $l$ impair : digest de $B_{L_1}^{(\lceil l/2 \rceil)}$, mise en gage de $B_{B_1}$, preuve avec $B_{L_1}^{(\lceil l/2 \rceil)}$, entrées $B_{io}^{(l)}$, et bus $B_{B_1}$.

$$\sigma_l = \left( 1, \left( l, \lceil l/2 \rceil, 0, 0, \lceil l/2 \rceil, \lceil l/2 \rceil - 1 \right) \right)$$

  - Si $l$ pair : digest de $B_{L_2}^{(\lceil l/2 \rceil)}$, mise en gage de $B_{B_2}$, preuve avec $B_{L_2}^{(\lceil l/2 \rceil)}$, entrées $B_{io}^{(l)}$, et bus $B_{B_2}$.

$$\sigma_l = \left( 2, \left( l, 0, \lceil l/2 \rceil, 0, \lceil l/2 \rceil - 1, \lceil l/2 \rceil \right) \right)$$

- Pour $l = m + 1$ : digest de $B_{L_3}$, preuve avec $B_{L_3}$, entrées $B_{io}^{(l)}$, et la banque de bus $B_{B_1}$ (si m est impair) ou $B_{B_2}$ (sinon).

$$\sigma_l = \left( 3, \left( m + 1, 0, 0, 1, \lceil l - 1/2 \rceil, 0 \right) \right) \text{ ou } \sigma_l = \left( 3, \left( m + 1, 0, 0, 1, 0, \lceil l - 1/2 \rceil \right) \right).$$

Pour un nombre x la notation $\lceil x/2 \rceil$ (respectivement $\lfloor x/2 \rfloor$) désigne l'entier naturel supérieur ou égal (respectivement inférieur ou égal) à la valeur rationnelle $x/2$. Pour plus d'informations concernant l'utilisation des banques et d'un tel ordonnancement, les paragraphes ci-dessous peuvent être lus à la lumière de la publication référencée ci-dessus décrivant le protocole Geppetto dont le protocole présenté ci-dessous est dérivé.

Dans ces deuxième et troisième modes de mise en oeuvre, un environnement bilinéaire asymétrique ($q$, $G_1$, $G_2$, $G_T$, $g_1$, $g_2$, $e$) est défini avec q est un nombre premier, $G_1$, $G_2$ et $G_T$ trois groupes d'ordre $q$, $g_1$ un générateur de $G_1$, $g_2$ un générateur de $G_2$, et $e$ un couplage bilinéaire non-dégénéré $e$: $G_1 \times G_2 \rightarrow G_T$.

Le circuit arithmétique peut être représenté sous la forme d'un multi-QAP $Q = (\{B_b\}_{b \in [1, \ell]}, t, V, W, Y)$ de taille $\rho$ et de degré $\delta$, avec $\{B_b\}_{b \in [1, \ell]}$ un ensemble de $\ell$ banques $B_b$ de Q utilisées dans le calcul de la fonction F, et V={vi}, W={wi}, Y={yi} avec $0 \leq i \leq \rho$.

Lors de l'étape de génération E3 par le dispositif client d'une clé publique d'évaluation et d'une clé publique de vérification, des aléas s, $\{(\alpha_{bv}, \alpha_{bw}, \alpha_{by}, \beta_b, \gamma_b)\}_{b \in [1, \ell]}$, $r_v$, $r_w$ sont générés dans $\mathbb{Z}_q$.

Puis les coefficients suivants sont définis : $r_y = r_v \cdot r_w$, $g_{v1} = g_1^{r_v}$, $g_{v2} = g_2^{r_v}$, $g_{w1} = g_1^{r_w}$, $g_{w2} = g_2^{r_w}$, $g_{y1} = g_1^{r_y}$ et $g_{y2} = g_2^{r_y}$.

La clé publique d'évaluation $EK_F$ est alors générée comme égale à : $(\{EK_{Fb}\}_{b \in [1, \ell]}, \{g_1^{s^i}\}_{i \in [1, \delta]}, g_{v1}^{t(s)}, g_{w1}^{t(s)}, g_{y1}^{t(s)}, g_{v2}^{t(s)}, g_{y2}^{t(s)})$.

Chaque clef publique de banque $EK_{Fb}$ est égale à $(EK_{Fb1}, EK_{Fb2})$ et générée en calculant :

$$EK_{Fb1} = \left( \begin{cases} g_{v1}^{v_i(s)}, g_{w1}^{w_i(s)}, g_{y1}^{y_i(s)}, g_{v1}^{\alpha_{bv} \cdot v_i(s)}, g_{w1}^{\alpha_{bw} \cdot w_i(s)}, g_{y1}^{\alpha_{by} \cdot y_i(s)}, \\ g_{v1}^{\beta_b \cdot v_i(s)} \cdot g_{w1}^{\beta_b \cdot w_i(s)} \cdot g_{y1}^{\beta_b \cdot y_i(s)} \end{cases}_{i \in B_b}, \\ g_{v1}^{\alpha_{bv} \cdot t(s)}, g_{w1}^{\alpha_{bw} \cdot t(s)}, g_{y1}^{\alpha_{by} \cdot t(s)}, g_{v1}^{\beta_b \cdot t(s)}, g_{w1}^{\beta_b \cdot t(s)}, g_{y1}^{\beta_b \cdot t(s)} \right)$$

$$EK_{Fb2} = \left( \{g_{w2}^{w_i(s)}\}_{i \in B_b}, g_{w2}^{\alpha_{bw} \cdot t(s)} \right).$$

La clé publique de vérification $VK_F$ est également générée comme égale à : $(\{VK_{Fb}\}_{b \in [1, \ell]}, g_1, g_2, g_{y2}^{t(s)})$. Chaque

clef publique de banque $VK_{Fb}$ est égale à $(g_2{}^{\alpha_{bv}}, g_2{}^{\alpha_{bw}}, g_2{}^{\alpha_{by}}, g_2{}^{\gamma_b}, g_2{}^{\beta_b \cdot \gamma_b})$.

Le dispositif de calcul distant obtient E4 le circuit arithmétique et la clé publique d'évaluation.

Pour chaque donnée biométrique de l'entité, au moins une valeur de correspondance entre ladite donnée biométrique et au moins une donnée biométrique de référence peut alors être déterminée E5 par le dispositif de calcul distant en évaluant le circuit arithmétique reçu à partir des données biométriques de l'entité et de référence. Le dispositif de calcul distant évalue chaque sous fonction $F_\omega$ à partir des données biométriques de l'entité et de référence pour obtenir la valeur de correspondance et les valeurs du circuit.

La génération E6 par le dispositif de calcul distant, pour chaque valeur de correspondance déterminée, d'une preuve de la correction de l'exécution du calcul de la valeur de correspondance peut comprendre pour chaque $I = \{1, \dots, L\}$ une liste de digests et de preuves obtenus comme décrits ci-dessous.

Soit $\Lambda \subseteq [1, \ell]$ l'ensemble des indices $b \in [1, \ell]$ tels que $T_{lb} \neq 0$ dans l'ordonnancement $\sigma = ((f_l, (T_{l1}, \dots, T_{l\ell})))_{l \in [1,L]}$.

On note par la suite : $\Gamma = U_{b \in \Lambda} B_b$, $\{c_j\}_{j \in B_b}$ une instance de la banque $B_b$ et $\Delta = \{c_j\}_{i \in \Gamma}$ l'ensemble des valeurs de $\Gamma$.

Pour chaque banque $B_b$ telle que $b \in A$,

- le dispositif de calcul distant génère des aléas de mises en gage $o_b = (o_{bv}, o_{bw}, o_{by})$ dans $\mathbb{Z}_q$.

- il calcule ensuite le <u>digest $D_b$</u> égal à $(D_{b1}, D_{b2})$ à partir de l'instance de la banque de variables $B_b$ : $B_b{}^{(T_{lb})} = \{c_i \in \Delta\}_{i \in B_b}$ et des aléas de <u>mise en gage $o_b$</u>. De tels digests sont tels que :

  ○ si la banque $B_b$ est une banque d'entrée/sortie : $D_{b1} = (g_{v1}{}^{v(b)(s)}, g_{y1}{}^{y(b)(s)}$ et $D_{b2} = (g_{w2}{}^{w(b)(s)})$,

  ○ si la banque $B_b$ n'est pas une banque d'entrée/sortie :

$$D_{b1} =$$
$$\begin{pmatrix} g_{v1}{}^{v^{(b)}(s)}, g_{w1}{}^{w^{(b)}(s)}, g_{y1}{}^{y^{(b)}(s)}, g_{v1}{}^{\alpha_{bv} \cdot v^{(b)}(s)}, g_{w1}{}^{\alpha_{bw} \cdot w^{(b)}(s)}, g_{y1}{}^{\alpha_{by} \cdot y^{(b)}(s)}, \\ g_{v1}{}^{\beta_b \cdot v^{(b)}(s)} \cdot g_{w1}{}^{\beta_b \cdot w^{(b)}(s)} \cdot g_{y1}{}^{\beta_b \cdot y^{(b)}(s)} \end{pmatrix}$$

$$D_{b2} = \left( g_{w2}{}^{w^{(b)}(s)} \right)$$

avec :

$$v^{(b)}(s) = \sum_{i \in B_b} c_i \cdot v_i(s) + o_{bv} \cdot t(s),$$

$$w^{(b)}(s) = \sum_{i \in B_b} c_i \cdot w_i(s) + o_{bw} \cdot t(s),$$

$$y^{(b)}(s) = \sum_{i \in B_b} c_i \cdot y_i(s) + o_{by} \cdot t(s).$$

Le dispositif de calcul distant détermine ensuite un polynôme $h^{(l)}(x)$ tel que $p^{(l)}(x) = h^{(l)}(x) \cdot t(x)$ avec

$$p^{(l)}(x) = \left( v_0(x) + \sum_{i \in \Gamma} c_i \cdot v_j(x) + \sum_{b \in \Lambda} o_{bv} \cdot t(x) \right) \cdot \left( w_0(x) + \sum_{i \in \Gamma} c_i \cdot w_j(x) + \sum_{b \in \Lambda} o_{bw} \cdot t(x) \right) - \left( y_0(x) + \sum_{i \in \Gamma} c_i \cdot y_j(x) + \sum_{b \in \Lambda} o_{by} \cdot t(x) \right)$$

Enfin, il calcule un <u>élément de preuve $\pi^{(l)}$</u> égal à $g_1{}^{h(l)(s)}$.

Le dispositif de calcul distant transmet E7 ensuite les valeurs de correspondance et lesdites preuves générées comprenant la liste de digests et d'éléments de preuve calculés au dispositif client.

Les preuves reçues par le dispositif client sont de la forme :
$D_1{}^{(1)}, \dots, D_\ell{}^{(1)}, \pi^{(1)}, \dots, D_1{}^{(L)}, \dots, D_\ell{}^{(L)}, \pi^{(L)}$ où pout tout $I \in \{1, \dots, L\}$ et e $\{1, \dots, \ell\}$ :

$$D_b{}^{(l)} = \left( \left( g_{v1}^{V_b{}^{(l)}}, g_{w1}^{W_b{}^{(l)}}, g_{y1}^{Y_b{}^{(l)}}, g_{v1}^{V_b'{}^{(l)}}, g_{w1}^{W_b'{}^{(l)}}, g_{y1}^{Y_b'{}^{(l)}}, g_1^{Z_b{}^{(l)}} \right), \left( g_{w2}^{W_b{}^{(l)}} \right) \right)$$

et

$$\pi^{(l)} = g_1^{H^{(l)}}.$$

Deux variantes de mise en oeuvre de vérification de la preuve reçue E8 sont explicitées ci-dessous.

Dans une première variante de mise en oeuvre, le dispositif client vérifie ensuite chaque preuve reçue en mettant en oeuvre :

- une vérification des $L \cdot \ell$ digests, pour $1 \in \{1, ..., L\}$ et $b \in \{1, ... , \ell\}$ comprenant les tests d'égalité suivants :

  ○

$$e \left( g_{v1}^{V_b'{}^{(l)}}, g_2{}^{\alpha_{bv}} \right) = e \left( g_{v1}^{V_b{}^{(l)}}, g_2 \right)$$

  ○

$$e \left( g_{w1}^{W_b'{}^{(l)}}, g_2{}^{\alpha_{bw}} \right) = e \left( g_{w1}^{W_b{}^{(l)}}, g_2 \right)$$

  ○

$$e \left( g_{y1}^{Y_b'{}^{(l)}}, g_2{}^{\alpha_{by}} \right) = e \left( g_{y1}^{Y_b{}^{(l)}}, g_2 \right)$$

  ○

$$e \left( g_1^{Z_b{}^{(l)}}, g_2{}^{\gamma_b} \right) = e \left( g_{v1}^{V_b{}^{(l)}} \cdot g_{w1}^{W_b{}^{(l)}} \cdot g_{y1}^{Y_b{}^{(l)}}, g_2{}^{\beta_b \cdot \gamma_b} \right)$$

- une vérification des $L$ preuves comprenant pour $1 \in \{1, ..., L\}$ le test d'égalité suivant :

$$e \left( \prod_{b=1}^{\ell} \left( g_{v1}^{V_b{}^{(l)}} \right), \prod_{b=1}^{\ell} \left( g_{w2}^{W_b{}^{(l)}} \right) \right) = e \left( g_1^{H^{(l)}}, g_{y2}{}^{t(s)} \right) \cdot e \left( \prod_{b=1}^{\ell} \left( g_{y1}^{Y_b{}^{(l)}} \right), g_2 \right)$$

Dans une deuxième variante de mise en oeuvre, le dispositif client vérifie ensuite chaque preuve reçue en mettant en oeuvre une vérification par lot (« batch vérification ») comprenant, étant donné un paramètre de correction $\lambda$ :

- une sélection d'un vecteur aléatoire $(d_1, ... , d_{3 \cdot \ell})$ d'éléments de taille $\lambda$,
- une vérification par lot les $L \cdot \ell$ digests, en $\ell$ fois en mettant en oeuvre les tests d'égalité suivants, pour $b \in \{1, ... , \ell\}$ :

  ○

$$e\left(\prod_{l=1}^{L}\left(g_{v1}^{V_b'^{(l)}}\right)^{d_l},g_2{}^{\alpha_{bv}}\right)\cdot e\left(\prod_{l=1}^{L}\left(g_{w1}^{W_b'^{(l)}}\right)^{d_{L+l}},g_2{}^{\alpha_{bw}}\right)\cdot$$

$$e\left(\prod_{l=1}^{L}\left(g_{y1}^{Y_b'^{(l)}}\right)^{d_{2\cdot L+l}},g_2{}^{\alpha_{by}}\right)=e\left(\prod_{l=1}^{L}\left(g_{v1}^{V_b^{(l)}}\right)^{d_l}\cdot\prod_{l=1}^{L}\left(g_{w1}^{W_b^{(l)}}\right)^{d_{L+l}}\cdot\right.$$

$$\left.\prod_{l=1}^{L}\left(g_{y1}^{Y_b^{(l)}}\right)^{d_{2\cdot L+l}},g_2\right)$$

∘

$$e\left(\prod_{l=1}^{L}\left(g_1^{Z_b^{(l)}}\right)^{d_l},g_2{}^{\gamma_b}\right)=e\left(\prod_{l=1}^{L}\left(g_{v1}^{V_b^{(l)}}\cdot g_{w1}^{W_b^{(l)}}\cdot g_{y1}^{Y_b^{(l)}}\right)^{d_l},g_2{}^{\beta_b\cdot\gamma_b}\right)$$

- une vérification par lot les L preuves en mettant en oeuvre le test d'égalité suivant:

$$\prod_{l=1}^{L}e\left(\prod_{b=1}^{\ell}\left(g_{v1}^{V_b^{(l)}}\right)^{d_l},\prod_{b=1}^{\ell}\left(g_{w2}^{W_b^{(l)}}\right)\right)=e\left(\prod_{l=1}^{L}\left(g_1^{H^{(l)}}\right)^{d_l},g_{y2}{}^{t(s)}\right)\cdot$$

$$e\left(\prod_{l=1}^{L}\prod_{b=1}^{\ell}\left(g_{y1}^{Y_b^{(l)}}\right)^{d_l},g_2\right),$$

- et en option une vérification de l'appartenance des éléments sur lesquels les couplages s'appliquent à leurs groupes respectifs.

Le procédé mis en oeuvre permet ainsi de réaliser une identification biométrique en comparant des données biométriques dans le cadre d'un protocole de calcul publiquement vérifiable tout en minimisant le temps nécessaire à la production et à la vérification des preuves relatives à la bonne exécution de ce calcul, grâce à la minimisation du nombre de multiplieurs employés pour représenter ce calcul sous forme de circuit arithmétique.

**Revendications**

1. Procédé d'identification biométrique d'une entité, par un système d'identification biométrique comprenant un dispositif client et un dispositif de calcul distant, comprenant :

   • un calcul (F1) d'au moins une valeur de correspondance entre au moins une donnée biométrique de l'entité u et au moins une donnée biométrique de référence u', par application d'une fonction F auxdites données biométriques, chacune desdites données étant un vecteur de N entiers binaires $u_i$ ou $u'_i$ avec $1 \le i \le N$, chaque entier étant codé sur n bits, ladite fonction comprenant un produit scalaire entre une donnée biométrique de l'entité et une donnée biométrique de référence, ledit calcul mettant en oeuvre un procédé non-interactif de calcul publiquement vérifiable comprenant des étapes de :

      • représentation (E1) de ladite fonction sous forme d'un circuit arithmétique comprenant des fils transportant des valeurs du corps premier fini $\mathbb{Z}_q$ , avec q un nombre premier, et reliant des opérateurs d'addition et de multiplication,
      • conversion (E2) dudit circuit arithmétique en une représentation polynomiale, QAP (« Quadratic Arithmetic Program ») ou multi-QAP,
      • génération (E3) d'une clé publique d'évaluation et d'une clé publique de vérification en fonction de ladite représentation polynomiale,
      • obtention (E4) par le dispositif de calcul distant du circuit arithmétique et de la clé publique d'évaluation,
      • pour chaque donnée biométrique de l'entité, détermination (E5) d'au moins une valeur de correspondance entre ladite donnée biométrique et au moins une donnée biométrique de référence par le dispositif de calcul distant en évaluant le circuit arithmétique ayant pour entrées la donnée biométrique de l'entité et la donnée biométrique de référence,
• pour chaque valeur de correspondance déterminée, génération (E6) par le dispositif de calcul distant d'une preuve de la correction de l'exécution du calcul de la valeur de correspondance, dite preuve générée, à partir de ladite représentation polynomiale, de la clé publique d'évaluation et du résultat de l'évaluation du circuit arithmétique,
• transmission (E7) par le dispositif de calcul distant desdites valeurs de correspondance et desdites preuves générées au dispositif client,
• vérification (E8) desdites preuves reçues par le dispositif client à l'aide de la clé de vérification publique,
• une identification (F2) de l'entité par le dispositif client en fonction des valeurs de correspondance et du résultat de ladite vérification de preuves,

• la représentation de ladite fonction (E1) comprenant l'encodage d'un nombre entier k>1 d'entiers binaires d'un vecteur d'une donnée biométrique sur au moins un fil d'entrée du circuit,
• **caractérisé en ce que** la fonction F comprend au moins m produits scalaires, m étant un diviseur de la longueur N des vecteurs de données biométriques,

- si le diviseur m est égal à 2 ou 3,

le circuit comprend au moins N/km opérateurs de multiplication reliés aux fils d'entrée du circuit, une mémoire de stockage, et au moins un opérateur d'addition, et l'évaluation du circuit (E5) comprend itérativement un calcul de chacun des m produits scalaires à l'aide desdits N/km opérateurs de multiplication, un stockage des m résultats des calculs desdits produits scalaires dans ladite mémoire de stockage et une sommation desdits résultats à l'aide dudit opérateur d'addition,

- si le diviseur m est supérieur ou égal à 4,

le circuit comprend au moins un premier sous-circuit de calcul de produit scalaire comprenant N/km premiers opérateurs de multiplication reliés aux fils d'entrée du circuit et une première mémoire de stockage, et un second sous-circuit de calcul de produit scalaire comprenant N/km seconds opérateurs de multiplication reliés aux fils d'entrée du circuit et une seconde mémoire de stockage, chacun desdits sous-circuit étant également relié à une sortie de la mémoire de stockage de l'autre sous-circuit,

et l'évaluation du circuit (E5) comprend itérativement un calcul de chacun des m produits scalaires en utilisant alternativement le premier ou le second sous-circuit pour calculer la somme du produit scalaire des valeurs des fils d'entrée de ce sous-circuit et de la valeur stockée dans la mémoire de stockage de l'autre sous-circuit,

- si le diviseur m est égal à 1

étant donné un environnement bilinéaire asymétrique $(q, G_1, G_2, G_T, g_1, g_2, e)$ où q est un nombre premier $G_1, G_2$ et $G_T$ trois groupes d'ordre q, $g_1$ un générateur de $G_1$, $g_2$ un générateur de $G_2$, et e un couplage bilinéaire non-dégénéré $e: G_1 \times G_2 \to G_T$ et le circuit arithmétique étant représenté sous la forme d'un QAP du circuit $Q = (t, V, W, Y)$ de taille $\rho$ et de degré $\delta$, avec $V=\{vi\}$, $W=\{wi\}$, $Y=\{yi\}$, $0 \le i \le \rho$, et étant donnés $I_{io} = \{1, ..., \theta\}$ l'ensemble des indices correspondants aux fils d'entrée/sortie du circuit et $I_{mid} = \{\theta + 1, ...,\rho\}$ l'ensemble des indices des fils intermédiaires du circuit n'étant pas des fils d'entrée du circuit,

- l'étape de génération (E3) d'une clé publique d'évaluation et d'une clé publique de vérification comprend :

• la génération d'aléas $r_v, r_w, s, \alpha_v, \alpha_w, \alpha_y, \beta, \gamma$ dans $\mathbb{Z}_q$ ,
• la définition des coefficients $r_y = r_v \cdot r_w$, $g_{v1} = g_1^{r_v}$, $g_{w1} = g_1^{r_w}$, $g_{w2} = g_2^{r_w}$, $g_{y1} = g_1^{r_y}$ et $g_{y2} = g_2^{r_y}$,
• la génération de la <u>clé publique d'évaluation</u> $EK_F$ égale à $(EK_{F1}, EK_{F2})$ où

$$EK_{F1} = \begin{pmatrix} \left\{g_{v1}^{v_i(s)}\right\}_{i \in I_{mid}}, \left\{g_{w1}^{w_i(s)}\right\}_{i \in I_{mid}}, \left\{g_{y1}^{y_i(s)}\right\}_{i \in I_{mid}}, \\ \left\{g_{v1}^{\alpha_v \cdot v_i(s)}\right\}_{i \in I_{mid}}, \left\{g_{w1}^{\alpha_w \cdot w_i(s)}\right\}_{i \in I_{mid}}, \left\{g_{y1}^{\alpha_y \cdot y_i(s)}\right\}_{i \in I_{mid}}, \\ \left\{g_1^{s^i}\right\}_{i \in [1,\delta]}, \left\{g_{v1}^{\beta \cdot v_i(s)} \cdot g_{w1}^{\beta \cdot w_i(s)} \cdot g_{y1}^{\beta \cdot y_i(s)}\right\}_{i \in I_{mid}} \end{pmatrix}$$

$$EK_{F2} = \left( \left\{ g_{w2}^{w_i(s)} \right\}_{i \in I_{mid}} \right)$$

• la génération de la <u>clé publique de vérification</u> $VK_F$ égale à ($VK_{F1}$,$VK_{F2}$) où :

$$VK_{F1} = \left( g_1, \left\{ g_{v1}^{v_i(s)} \right\}_{i \in [1,\theta]}, \left\{ g_{y1}^{y_i(s)} \right\}_{i \in [1,\theta]} \right)$$

$$VK_{F2} = \left( g_2, g_2^{\alpha_v}, g_2^{\alpha_w}, g_2^{\alpha_y}, g_2^{\gamma}, g_2^{\beta \cdot \gamma}, g_{y2}^{t(s)}, \left\{ g_{w2}^{w_i(s)} \right\}_{i \in [1,\theta]} \right)$$

- la génération (E6) par le dispositif de calcul distant d'une preuve de la correction de l'exécution du calcul d'une valeur de correspondance comprend, $\{c_i\}_{i \in [1,\rho]}$ étant l'ensemble des valeurs du circuit déterminées lors de l'étape de détermination de la valeur de correspondance:

• la détermination d'un polynôme $h(x)$ tel que p(x) = $h(x)$ · $t(x)$ avec

$$p(x) = \left( v_0(x) + \sum_{i=1}^{\rho} c_i \cdot v_i(x) \right) \cdot \left( w_0(x) + \sum_{i=1}^{\rho} c_i \cdot w_i(x) \right) -$$

$$\left( y_0(x) + \sum_{i=1}^{\rho} c_i \cdot y_i(x) \right),$$

• le calcul de la <u>preuve générée</u> $\pi$ = ($\pi_1$, $\pi_2$) avec :

$$\pi_1 = \begin{pmatrix} g_{v1}^{v_{mid}(s)}, g_{w1}^{w_{mid}(s)}, g_{y1}^{y_{mid}(s)}, g_1^{h(s)}, \\ g_{v1}^{\alpha_v \cdot v_{mid}(s)}, g_{w1}^{\alpha_w \cdot w_{mid}(s)}, g_{y1}^{\alpha_y \cdot y_{mid}(s)}, \\ g_{v1}^{\beta \cdot v_{mid}(s)} \cdot g_{w1}^{\beta \cdot w_{mid}(s)} \cdot g_{y1}^{\beta \cdot y_{mid}(s)} \end{pmatrix}, \qquad \pi_2 =$$

$$\left( g_{w2}^{w_{mid}(s)} \right)$$

où :

$$v_{mid}(x) = \sum_{i \in I_{mid}} c_i \cdot v_i(x), \qquad w_{mid}(x) = \sum_{i \in I_{mid}} c_i \cdot w_i(x)$$

et

$$y_{mid}(x) = \sum_{i \in I_{mid}} c_i \cdot y_i(x),$$

- et, dans lequel lesdites preuves reçues par le dispositif client étant égales à ($\pi_{r1}$, $\pi_{r2}$) avec $\pi_{r1}$ sous la forme :

$$\left( g_{v1}^{V_{mid}}, g_{w1}^{W_{mid}}, g_{y1}^{Y_{mid}}, g_1^{H}, g_{v1}^{V'_{mid}}, g_{w1}^{W'_{mid}}, g_{y1}^{Y'_{mid}}, g_1^{Z} \right)$$

et $\pi_{r2}$ sous la forme $g_{w2}^{W_{mid}}$, la vérification d'une preuve reçue (E8) comprend la mise en oeuvre des tests d'égalité suivants :

•

$$e \left( g_{v1}^{v_0(s)} \cdot g_{v1}^{v_{io}(s)} \cdot g_{v1}^{V_{mid}}, g_{w2}^{w_0(s)} \cdot g_{w2}^{w_{io}(s)} \cdot g_{w2}^{W_{mid}} \right) =$$

$$e \left( g_1^{H}, g_{y2}^{t(s)} \right) \cdot e \left( g_{y1}^{y_0(s)} \cdot g_{y1}^{y_{io}(s)} \cdot g_{y1}^{Y_{mid}}, g_2 \right),$$

-

$$e\left(\left(g_{v1}{}^{V'_{mid}}\right)^{d_1}\cdot\left(g_{w1}{}^{W'_{mid}}\right)^{d_2}\cdot\left(g_{y1}{}^{Y'_{mid}}\right)^{d_3},g_2\right)=$$

$$e\left(\left(g_{v1}{}^{V_{mid}}\right)^{d_1},g_2{}^{\alpha_v}\right)\cdot e\left(\left(g_{w1}{}^{W_{mid}}\right)^{d_2},g_2{}^{\alpha_w}\right)\cdot e\left(\left(g_{y1}{}^{Y_{mid}}\right)^{d_3},g_2{}^{\alpha_y}\right),$$

-

$$e(g_1{}^Z,g_2{}^\gamma)=e\left(g_{v1}{}^{V_{mid}}\cdot g_{w1}{}^{W_{mid}}\cdot g_{y1}{}^{Y_{mid}},g_2{}^{\beta\cdot\gamma}\right)$$

où $\quad g_{v1}{}^{v_{io}(s)}=\prod_{i=1}^{\theta}\left(g_{v1}{}^{v_i(s)}\right)^{c_i},\quad g_{w2}{}^{w_{io}(s)}=\prod_{i=1}^{\theta}\left(g_{w2}{}^{w_i(s)}\right)^{c_i}\quad$ et

$g_{y1}{}^{y_{io}(s)}=\prod_{i=1}^{\theta}\left(g_{y1}{}^{y_i(s)}\right)^{c_i}$ et $(d_1, d_2, d_3)$ des éléments de $\mathbb{Z}_q$ sur $\lambda$ bits avec $\lambda$ un paramètre de sécurité.

**2.** Procédé d'identification selon la revendication précédente dans lequel l'étape de vérification desdites preuves reçues (E8) comprend une vérification de couplages par lot.

**3.** Procédé d'identification selon l'une des revendications précédentes dans lequel l'identification de l'entité comprend une comparaison des valeurs de correspondance à un seuil prédéterminé.

**4.** Procédé d'identification selon l'une des revendications 1 à 3 dans lequel la fonction F comprend une comparaison du résultat du produit scalaire entre lesdites données biométriques de l'entité et de référence à un seuil prédéterminé.

**5.** Procédé d'identification selon l'une des revendications précédentes dans lequel l'encodage de k entiers binaires $u_i$ ou $u'_i$ sur un fil d'entrée d'un $j^{\text{ème}}$ opérateur de multiplication, $1\le j \le N/k$, est égal à $E_k^{\left(\frac{(z-1)N}{m}+(j-1)k+1\right)}(u)$ ou $E_k^{\left(\frac{(z-1)N}{m}+(j-1)k+1\right)}(u')$ avec $1 \le z \le m$, et est donné par la formule :

$$E_k^{((j-1)k+1)}(x)=\sum_{i=1}^{k}2^{\varepsilon_i}\cdot x_{(j-1)k+i}=2^{\varepsilon_1}\cdot x_{(j-1)k+1}+\cdots+2^{\varepsilon_k}\cdot x_{(j-1)k+k}$$

avec $\varepsilon_1, ..., \varepsilon_k$ des entiers prédéterminés.

**6.** Produit programme d'ordinateur comprenant des instructions de code pour l'exécution d'un procédé selon l'une quelconque des revendications précédentes lorsque ce programme est exécuté par un processeur.

**7.** Système d'identification biométrique (2) comprenant un dispositif client (3) et un dispositif de calcul distant (4) **caractérisé en ce que** :
ledit dispositif client et ledit dispositif de calcul distant comprennent chacun un processeur, une interface et une mémoire pour mettre en oeuvre les étapes du procédé d'identification selon l'une quelconque des revendications 1 à 5.

**Patentansprüche**

**1.** Biometrisches Identifizierungsverfahren einer Einheit durch ein biometrisches Identifizierungssystem, das eine Client-Vorrichtung und eine entfernte Rechenvorrichtung enthält, das enthält:

• eine Berechnung (F1) mindestens eines Übereinstimmungswerts zwischen mindestens einem biometrischen Datenwert der Einheit u und mindestens einem biometrischen Bezugsdatenwert u' durch Anwendung einer Funktion F an die biometrischen Daten, wobei jede der Daten ein Vektor von N binären Ganzzahlen $u_i$ oder $u'_i$ ist, mit $1 \leq i \leq N$, wobei jede Ganzzahl mit n Bits codiert ist, wobei die Funktion ein skalares Produkt zwischen einem biometrischen Datenwert der Einheit und einem biometrischen Bezugsdatenwert enthält, wobei die Berechnung ein öffentlich überprüfbares nicht-interaktives Rechenverfahren verwendet, das Schritte enthält der:

• Darstellung (E1) der Funktion in Form einer arithmetischen Schaltung, die Drähte enthält, welche Werte des endlichen Primärkörpers $\mathbb{Z}_q$ transportieren, mit q einer Primzahl, und Additions- und Multiplikationsoperatoren verbinden,
• Umwandlung (E2) der arithmetischen Schaltung in eine polynomiale Darstellung, QAP (« Quadratic Arithmetic Program ») oder Multi-QAP,
• Generierung (E3) eines öffentlichen Bewertungsschlüssels und eines öffentlichen Überprüfungsschlüssels abhängig von der polynomialen Darstellung,
• Erhalt (E4) durch die entfernte Rechenvorrichtung der arithmetischen Schaltung und des öffentlichen Bewertungsschlüssels,
• für jeden biometrischen Datenwert der Einheit, Bestimmung (E5) mindestens eines Übereinstimmungswerts zwischen dem biometrischen Datenwert und mindestens einem biometrischen Bezugsdatenwert durch die entfernte Rechenvorrichtung, indem die arithmetische Schaltung bewertet wird, die als Eingänge den biometrischen Datenwert der Einheit und den biometrischen Bezugsdatenwert hat,
• für jeden bestimmten Übereinstimmungswert, Generierung (E6) durch die entfernte Rechenvorrichtung eines Nachweises der Korrektur der Ausführung der Berechnung des Übereinstimmungswerts, generierter Nachweis genannt, ausgehend von der polynomialen Darstellung, vom öffentlichen Bewertungsschlüssel und vom Ergebnis der Bewertung der arithmetischen Schaltung,
• Übertragung (E7) durch die entfernte Rechenvorrichtung der Übereinstimmungswerte und der generierten Nachweise an die Client-Vorrichtung,
• Überprüfung (E8) der erhaltenen Nachweise durch die Client-Vorrichtung mit Hilfe des öffentlichen Überprüfungsschlüssels,

• eine Identifizierung (F2) der Einheit durch die Client-Vorrichtung abhängig von den Übereinstimmungswerten und vom Ergebnis der Überprüfung von Nachweisen,
• wobei die Darstellung der Funktion (E1) die Codierung einer Ganzzahl k>1 von binären Ganzzahlen eines Vektors eines biometrischen Datenwerts auf mindestens einem Eingangsdraht der Schaltung enthält,

**dadurch gekennzeichnet, dass** die Funktion F mindestens m skalare Produkte enthält, wobei m ein Divisor der Länge N der Vektoren biometrischer Daten ist,

• wenn der Divisor m gleich 2 oder 3 ist,

enthält die Schaltung mindestens N/km mit den Eingangsdrähten der Schaltung verbundene Multiplikationsoperatoren, einen Speicher und mindestens einen Additionsoperator,
und die Bewertung der Schaltung (E5) enthält iterativ eine Berechnung jedes der m skalaren Produkte mit Hilfe der N/km Multiplikationsoperatoren, ein Speichern der m Ergebnisse der Berechnungen der skalaren Produkte im Speicher und eine Summierung der Ergebnisse mit Hilfe des Additionsoperators,

• wenn der Divisor m größer als oder gleich 4 ist, enthält die Schaltung mindestens eine erste Teilschaltung zur Berechnung eines skalaren Produkts, die N/km mit den Eingangsdrähten der Schaltung verbundene erste Multiplikationsoperatoren und einen ersten Speicher enthält, und eine zweite Teilschaltung zur Berechnung eines skalaren Produkts, die N/km mit den Eingangsdrähten der Schaltung verbundene zweite Multiplikationsoperatoren und einen zweiten Speicher enthält, wobei jede der Teilschaltungen ebenfalls mit einem Ausgang des Speichers der anderen Teilschaltung verbunden ist, und die Bewertung der Schaltung (E5) enthält iterativ eine Berechnung jedes der m skalaren Produkte, indem alternativ die erste oder die zweite Teilschaltung verwendet wird, um die Summe des skalaren Produkts der Werte der Eingangsdrähte dieser Teilschaltung und des im Speicher der anderen Teilschaltung gespeicherten Werts zu berechnen,
• wenn der Divisor m gleich 1 ist,
angesichts einer unsymmetrischen bilinearen Umgebung ($q$, $G_1$, $G_2$, $G_T$, $g_1$, $g_2$, $e$), wobei $q$ eine Primzahl ist, $G_1$, $G_2$ und $G_T$ drei Gruppen der Ordnung $q$, $g_1$ ein Generator von $G_1$, $g_2$ ein Generator von $G_2$, und $e$ eine

nicht-degenerierte bilineare Kopplung $e: G_1 \times G_2 \rightarrow G_T$ ist, und die arithmetische Schaltung in Form einer QAP der Schaltung Q = (t, V, W, Y) der Größe $\rho$ und des Grads $\delta$ dargestellt ist, mit V={vi}, W={wi}, Y={yi}, $0 \leq i \leq \rho$, und angesichts $I_{io}$ = {1, ... , $\theta$} der Gesamtheit der Indizes entsprechend den Eingangs-/Ausgangsdrähten der Schaltung und $I_{mid}$ = {$\theta$ + 1, ... , $\rho$} der Gesamtheit der Indizes der Zwischendrähte der Schaltung, die nicht Eingangsdrähte der Schaltung sind,

- enthält der Schritt der Generierung (E3) eines öffentlichen Bewertungsschlüssels und eines öffentlichen Überprüfungsschlüssels:

    • die Generierung von Zufallszahlen $r_v$, $r_w$, $s$, $\alpha_v$, $\alpha_w$, $\alpha_y$, $\beta$, $\gamma$ in $\mathbb{Z}_q$ ,

    • die Definition der Koeffizienten $r_y = r_v \cdot r_w$,

$$g_{v1} = g_1^{r_v}, \quad g_{w1} = g_1^{r_w}, \quad g_{w2} = g_2^{r_w}, \quad g_{y1} = g_1^{r_y} \text{ und } g_{y2} = g_2^{r_y} ,$$

    • die Generierung des öffentlichen Bewertungsschlüssels $EK_F$ gleich ($EK_{F1}$, $EK_{F2}$) wobei

$$EK_{F1} =$$
$$\begin{pmatrix} \left\{ g_{v1}^{v_i(s)} \right\}_{i \in I_{mid}}, \left\{ g_{w1}^{w_i(s)} \right\}_{i \in I_{mid}}, \left\{ g_{y1}^{y_i(s)} \right\}_{i \in I_{mid}}, \\ \left\{ g_{v1}^{a_v \cdot v_i(s)} \right\}_{i \in I_{mid}}, \left\{ g_{w1}^{a_w \cdot w_i(s)} \right\}_{i \in I_{mid}}, \left\{ g_{y1}^{a_y \cdot y_i(s)} \right\}_{i \in I_{mid}}, \\ \left\{ g_1^{s^i} \right\}_{i \in [1,\delta]}, \left\{ g_{v1}^{\beta \cdot v_i(s)} \cdot g_{w1}^{\beta \cdot w_i(s)} \cdot g_{y1}^{\beta \cdot y_i(s)} \right\}_{i \in I_{mid}} \end{pmatrix}$$

$$EK_{F2} = \left( \left\{ g_{w2}^{w_i(s)} \right\}_{i \in I_{mid}} \right)$$

    • die Generierung des öffentlichen Überprüfungsschlüssels $VK_F$ gleich ($VK_{F1}$, $VK_{F2}$) wobei:

$$VK_{F1} = \left( g_1, \left\{ g_{v1}^{v_i(s)} \right\}_{i \in [1,\theta]}, \left\{ g_{y1}^{y_i(s)} \right\}_{i \in [1,\theta]} \right)$$

$$VK_{F2} = \left( g_2, g_2^{a_v}, g_2^{a_w}, g_2^{a_y}, g_2^{\gamma}, g_2^{\beta \cdot \gamma}, g_{y2}^{t(s)}, \left\{ g_{w2}^{w_i(s)} \right\}_{i \in [11,\theta]} \right)$$

- enthält die Generierung (E6) durch die entfernte Rechenvorrichtung eines Nachweises der Korrektur der Ausführung der Berechnung eines Übereinstimmungswerts, wobei $\{c_i\}_{i \in [1,\rho]}$ die Gesamtheit der im Schritt der Bestimmung des Übereinstimmungswerts bestimmten Werte der Schaltung ist:

    • die Bestimmung eines Polynoms $h(x)$ derart, dass $p(x) = h(x) \cdot t(x)$ mit

$$p(x) = \left( v_0(x) + \sum_{i=1}^{\rho} c_i \cdot v_i(x) \right) \cdot \left( w_0(x) + \sum_{i=1}^{\rho} c_i \cdot w_i(x) \right) - \left( y_0(x) + \sum_{i=1}^{\rho} c_i \cdot y_i(x) \right)$$

    • die Berechnung des generierten Nachweises $\pi = (\pi_1, \pi_2)$ mit:

$$\pi_1 = \begin{pmatrix} g_{v1}^{v_{mid}(s)}, g_{w1}^{w_{mid}(s)}, g_{y1}^{y_{mid}(s)}, g_1^{h(s)}, \\ g_{v1}^{a_v \cdot v_{mid}(s)}, g_{w1}^{a_w \cdot w_{mid}(s)}, g_{y1}^{a_y \cdot y_{mid}(s)}, \\ g_{v1}^{\beta \cdot v_{mid}(s)} \cdot g_{w1}^{\beta \cdot w_{mid}(s)} \cdot g_{y1}^{\beta \cdot y_{mid}(s)} \end{pmatrix},$$

$$\pi_2 = \left(g_{w2}^{w_{mid}(s)}\right)$$

wobei:

$$v_{mid}(x) = \sum_{i \in I_{mid}} c_i \cdot v_i(x), \quad w_{mid}(x) = \sum_{i \in I_{mid}} c_i \cdot w_i(x)$$

und

$$y_{mid}(x) = \sum_{i \in I_{mid}} c_i \cdot y_i(x),$$

- und wobei, da die von der Client-Vorrichtung empfangenen Nachweise gleich ($\Pi_{r1}$, $\Pi_{r2}$) sind, mit $\Pi_{r1}$ in der Form: ($g_{v1}^{V_{mid}}, g_{w1}^{W_{mid}}, g_{y1}^{Y_{mid}}, g_1^{H}, g_{v1}^{V'_{mid}}, g_{w1}^{W'_{mid}}, g_{y1}^{Y'_{mid}}, g_1^{Z}$) und $\Pi_{r2}$ in der Form $g_{w2}^{W_{mid}}$, die Überprüfung eines empfangenen Nachweises (E8) die Durchführung der folgenden Gleichheitstests enthält:

- 
$$e\left(g_{v1}^{v_0(s)} \cdot g_{v1}^{v_{io}(s)} \cdot g_{v1}^{V_{mid}} \cdot g_{w2}^{w_0(s)} \cdot g_{w2}^{w_{io}(s)} \cdot g_{w2}^{W_{mid}}\right) =$$
$$e\left(g_1^{H}, g_{y2}^{t(s)}\right) \cdot e\left(g_{y1}^{y_0(s)} \cdot g_{y1}^{y_{io}(s)} \cdot g_{y1}^{Y_{mid}}, g_2\right),$$

- 
$$e\left(\left(g_{v1}^{v^t_{mid}}\right)^{d_1} \cdot \left(g_{w1}^{w^t_{mid}}\right)^{d_2} \cdot \left(g_{y1}^{Y'_{mid}}\right)^{d_3}, g_2\right) =$$
$$e\left(\left(g_{v1}^{V_{mid}}\right)^{d_1}, g_2^{a_v}\right) \cdot e\left(\left(g_{w1}^{W_{mid}}\right)^{d_2}, g_2^{a_w}\right) \cdot$$
$$e\left(\left(g_{y1}^{Y_{mid}}\right)^{d_3}, g_2^{a_y}\right),$$

- 
$$e(g_1^{Z}, g_2^{Y}) = e\left(g_{v1}^{V_{mid}} \cdot g_{w1}^{W_{mid}} \cdot g_{y1}^{Y_{mid}} \cdot g_2^{\beta \cdot y}\right)$$

wobei $g_{v1}^{v_{io}(s)} = \prod_{i=1}^{\theta} \left(g_{v1}^{v_i(s)}\right)^{c_i}, g_{w2}^{w_{io}(s)} = \prod_{i=1}^{\theta} \left(g_{w2}^{w_i(s)}\right)^{c_i}$ und $g_{y1}^{y_{io}(s)} = \prod_{i=1}^{\theta} \left(g_{y1}^{y_i(s)}\right)^{c_i}$ und ($d_1$, $d_2$, $d_3$) Elemente von $\mathbb{Z}_q$ aus $\lambda$ Bits mit $\lambda$ einem Sicherheitsparameter.

2. Identifizierungsverfahren nach dem vorhergehenden Anspruch, wobei der Schritt der Überprüfung der empfangenen Nachweise (E8) eine Überprüfung von Kopplungen pro Batch enthält.

3. Identifizierungsverfahren nach einem der vorhergehenden Ansprüche, wobei die Identifizierung der Einheit einen Vergleich der Übereinstimmungswerte mit einer vorbestimmten Schwelle enthält.

**4.** Identifizierungsverfahren nach einem der Ansprüche 1 bis 3, wobei die Funktion F einen Vergleich des Ergebnisses des skalaren Produkts zwischen den biometrischen Daten der Einheit und biometrischen Bezugsdaten mit einer vorbestimmten Schwelle enthält.

**5.** Identifizierungsverfahren nach einem der vorhergehenden Ansprüche, wobei die Codierung von k binären Ganzzahlen $u_i$ oder $u'_i$ auf einem Eingangsdraht eines j-ten Multiplikationsoperators, $1 \le j \le N/K$, gleich

$$E_k \left( \frac{(z-1)N}{m} + (j-1)k + 1 \right)_{(u)} \text{ oder } E_k \left( \frac{(z-1)N}{m} + (j-1)k + 1 \right)_{(u')} \text{ ist,}$$

mit $1 \le z \le m$, und durch die Formel gegeben wird:

$$E_k^{((j-1)k+1)}(x) = \sum_{i=1}^{k} 2^{\varepsilon_i} \cdot x_{(j-1)k+i} = 2^{\varepsilon_1} \cdot x_{(j-1)k+1} + \cdots + 2^{\varepsilon_k} \cdot x_{(j-1)k+k}$$

mit $\varepsilon_1, \dots \varepsilon_k$ vorbestimmten Ganzzahlen.

**6.** Computerprogrammprodukt, das Codeanweisungen für die Ausführung eines Verfahrens nach einem der vorhergehenden Ansprüche enthält, wenn dieses Programm von einem Prozessor ausgeführt wird.

**7.** Biometrisches Identifizierungssystem (2), das eine Client-Vorrichtung (3) und eine entfernte Rechenvorrichtung (4) enthält, **dadurch gekennzeichnet, dass**:
die Client-Vorrichtung und die entfernte Rechenvorrichtung je einen Prozessor, eine Schnittstelle und einen Speicher enthalten, um die Schritte des Identifizierungsverfahrens nach einem der Ansprüche 1 bis 5 durchzuführen.

**Claims**

**1.** Method for biometric identification of an entity, by a biometric identification system comprising a client device and a remote computation device, comprising:

. a calculation (F1) of at least one correspondence value between at least one biometric datum of the entity u and at least one reference biometric datum u', by application of a function F to said biometric data, each of said data being a vector of N binary integers $u_i$ or $u'_i$ with $1 \le i \le N$, each integer being coded on n bits, said function comprising a scalar product between a biometric datum of the entity and a reference biometric datum, said calculation implementing a publicly-verifiable, non-interactive calculation method comprising steps of:

. representation (E1) of said function in the form of an arithmetic circuit comprising wires transporting values of the finite first body $\mathbb{Z}_q$ , with q a first number, and linking addition and multiplication operators,
. conversion (E2) of said arithmetic circuit into a polynomial representation, QAP ("Quadratic Arithmetic Program") or multi-QAP,
. generation (E3) of an evaluation public key and of a verification public key as a function of said polynomial representation,
. obtaining (E4) by the remote computation device of the arithmetic circuit and of the evaluation public key,
. for each biometric datum of the entity, determination (E5) of at least one correspondence value between said biometric datum and at least one reference biometric datum by the remote computation device by evaluating the arithmetic circuit having for inputs the biometric datum of the entity and the reference biometric datum,
. for each determined correspondence value, generation (E6) by the remote computation device of a proof of the correction of the execution of the calculation of the correspondence value, called generated proof, from said polynomial representation, of the evaluation public key and of the result of the evaluation of the arithmetic circuit,
. transmission (E7) by the remote computation device of said correspondence values and of said generated proofs to the client device,

. verification (E8) of said proofs received by the client device using the public verification key,
. an identification (F2) of the entity by the client device as a function of the correspondence values and of the result of said verification of proofs,

. the representation of said function (E1) comprising the encoding of an integer number k>1 of binary integers of a vector of a biometric datum on at least one input wire of the circuit,
. **characterized in that** the function F comprises at least m scalar products, m being a divisor of the length N of the biometric data vectors,

. if the divisor m is equal to 2 or 3,

the circuit comprises at least N/km multiplication operators linked to the input wires of the circuit, a storage memory, and at least one additional operator,
and the evaluation of the circuit (E5) iteratively comprises a calculation of each of the m scalar products using said N/km multiplication operators, a storage of the m results of the calculations of said scalar products in said storage memory and a summing of said results using said addition operator,

. if the divisor m is greater than or equal to 4,

the circuit comprises at least one first scalar product calculation sub-circuit comprising N/km first multiplication operators linked to the input wires of the circuit and a first storage memory, and a second scalar product calculation sub-circuit comprising N/km second multiplication operators linked to the input wires of the circuit and a second storage memory, each of said subcircuits being also linked to an output of the storage memory of the other sub-circuit,
and the evaluation of the circuit (E5) iteratively comprises a calculation of each of the m scalar products by alternatively using the first or the second sub-circuit to calculate the sum of the scalar product of the values of the input wires of this sub-circuit and of the value stored in the storage memory of the other sub-circuit,

. if the divisor m is equal to 1,
given an asymmetrical bilinear environment $(q, G_1, G_2, G_T, g_1, g_2, e)$ in which q is a first number, $G_1, G_2$, and $G_T$ three groups of order $q$, $g_1$ a generator of $G_1$, $g_2$ a generator of $G_2$, and e a non-degenerate bilinear coupling $e: G_1 \times G_2 \to G_T$ and the arithmetic circuit being represented in the form of a QAP of the circuit $Q = (t, V, W, Y)$ of size $\rho$ and of degree $\delta$, with $V = \{vi\}$, $W = \{wi\}$, $Y = \{yi\}$, $0 \leq l \leq \rho$, and given $I_{io} = \{1 ,..., \theta\}$ the set of the indices corresponding to the input/output wires of the circuit and $I_{mid} = \{\theta + 1,..., \rho\}$ the set of the indices of the intermediate wires of the circuit not being input wires of the circuit,

- the step of generation (E3) of an evaluation public key and of a verification public key comprises:

. the generation of random numbers $r_v, r_w, s, \alpha_v, \alpha_w, \alpha_y, \beta, \gamma$ in $\mathbb{Z}_q$ ,
. the definition of the coefficients

$$r_y = r_v \cdot r_w, \quad g_{v1} = g_1^{r_v}, \quad g_{w1} = g_1^{r_w},$$

$$g_{w2} = g_2^{r_w}, \quad g_{y1} = g_1^{r_y} \text{and} \, g_{y2} = g_2^{r_y'},$$

. the generation of the evaluation public key $EK_F$ equal to $(EK_{F1}, EK_{F2})$ in which

$$EK_{F1} = \begin{pmatrix} \left\{g_{v1}^{v_i(s)}\right\}_{i \in I_{mid}}, \left\{g_{w1}^{w_i(s)}\right\}_{i \in I_{mid}}, \left\{g_{y1}^{y_i(s)}\right\}_{i \in I_{mid}}, \\ \left\{g_{v1}^{\alpha_v \cdot v_i(s)}\right\}_{i \in I_{mid}}, \left\{g_{w1}^{\alpha_w \cdot w_i(s)}\right\}_{i \in I_{mid}}, \left\{g_{y1}^{\alpha_y \cdot y_i(s)}\right\}_{i \in I_{mid}}, \\ \left\{g_1^{s^i}\right\}_{i \in [1,\delta]}, \left\{g_{v1}^{\beta \cdot v_i(s)} \cdot g_{w1}^{\beta \cdot w_i(s)} \cdot g_{y1}^{\beta \cdot y_i(s)}\right\}_{i \in I_{mid}} \end{pmatrix}$$

$$EK_{F2} = \left( \left\{ g_{w2}^{\,w_i(s)} \right\}_{i \in I_{mid}} \right)$$

. the generation of the verification public key $VK_F$ equal to ($VK_{F1}$, $VK_{F2}$) in which:

$$VK_{F1} = \left( g_1, \left\{ g_{v1}^{\,v_i(s)} \right\}_{i \in [1,\theta]}, \left\{ g_{y1}^{\,y_i(s)} \right\}_{i \in [1,\theta]} \right)$$

$$VK_{F2} = \left( g_2, g_2^{\,\alpha_v}, g_2^{\,\alpha_w}, g_2^{\,\alpha_y}, g_2^{\,\gamma}, g_2^{\,\beta \cdot \gamma}, g_{y2}^{\,t(s)}, \left\{ g_{w2}^{\,w_i(s)} \right\}_{i \in [1,\theta]} \right)$$

- the generation (E6) by the remote computation device of a proof of the correction of the execution of the calculation of a correspondence value comprises, $\{c_i\}_{i \in [1,\rho]}$ being the set of the values of the circuit determined in the step of determination of the correspondence value:

. the determination of a polynomial $h(x)$ such that $p(x) = h(x) . t(x)$ with
$$p(x) = \left( v_0(x) + \sum_{i=1}^{\rho} c_i \cdot v_i(x) \right) \cdot \left( w_0(x) + \sum_{i=1}^{\rho} c_i \cdot w_i(x) \right) - \left( y_0(x) + \sum_{i=1}^{\rho} c_i \cdot y_i(x) \right),$$
. the calculation of the generated proof $\pi = (\pi_1, \pi_2)$ with:

$$\pi_1 = \begin{pmatrix} g_{v1}^{\,v_{mid}(s)}, g_{w1}^{\,w_{mid}(s)}, g_{y1}^{\,y_{mid}(s)}, g_1^{\,h(s)}, \\ g_{v1}^{\,\alpha_v \cdot v_{mid}(s)}, g_{w1}^{\,\alpha_w \cdot w_{mid}(s)}, g_{y1}^{\,\alpha_y \cdot y_{mid}(s)}, \\ g_{v1}^{\,\beta \cdot v_{mid}(s)} \cdot g_{w1}^{\,\beta \cdot w_{mid}(s)} \cdot g_{y1}^{\,\beta \cdot y_{mid}(s)} \end{pmatrix}, \qquad \pi_2 =$$

$$\left( g_{w2}^{\,w_{mid}(s)} \right)$$

in which

$$v_{mid}(x) = \sum_{i \in I_{mid}} c_i \cdot v_i(x), \qquad w_{mid}(x) = \sum_{i \in I_{mid}} c_i \cdot w_i(x)$$

and

$$y_{mid}(x) = \sum_{i \in I_{mid}} c_i \cdot y_i(x),$$

- and in which said proofs received by the client device being equal to ($\pi_{r1}$, $\pi_{r2}$) with $\pi_{r1}$ in the form:

$$\left( g_{v1}^{\,V_{mid}}, g_{w1}^{\,W_{mid}}, g_{y1}^{\,Y_{mid}}, g_1^{\,H}, g_{v1}^{\,V'_{mid}}, g_{w1}^{\,W'_{mid}}, g_{y1}^{\,Y'_{mid}}, g_1^{\,Z} \right)$$

and $\pi_{r2}$ in the form $g_{w2}^{\,W_{mid}}$, the verification of a received proof (E8) comprises the implementation of the following equality tests:

.

$$e\left( g_{v1}^{\,v_0(s)} \cdot g_{v1}^{\,v_{io}(s)} \cdot g_{v1}^{\,V_{mid}}, g_{w2}^{\,w_0(s)} \cdot g_{w2}^{\,w_{io}(s)} \cdot g_{w2}^{\,W_{mid}} \right) =$$

$$e\left( g_1^{\,H}, g_{y2}^{\,t(s)} \right) \cdot e\left( g_{y1}^{\,y_0(s)} \cdot g_{y1}^{\,y_{io}(s)} \cdot g_{y1}^{\,Y_{mid}}, g_2 \right),$$

.

$$e\left(\left(g_{v1}{}^{V'_{mid}}\right)^{d_1} \cdot \left(g_{w1}{}^{W'_{mid}}\right)^{d_2} \cdot \left(g_{y1}{}^{Y'_{mid}}\right)^{d_3}, g_2\right) =$$

$$e\left(\left(g_{v1}{}^{V_{mid}}\right)^{d_1}, g_2{}^{\alpha_v}\right) \cdot e\left(\left(g_{w1}{}^{W_{mid}}\right)^{d_2}, g_2{}^{\alpha_w}\right) \cdot e\left(\left(g_{y1}{}^{Y_{mid}}\right)^{d_3}, g_2{}^{\alpha_y}\right),$$

.

$$e\left(g_1{}^{Z}, g_2{}^{\gamma}\right) = e\left(g_{v1}{}^{V_{mid}} \cdot g_{w1}{}^{W_{mid}} \cdot g_{y1}{}^{Y_{mid}}, g_2{}^{\beta \cdot \gamma}\right)$$

in which $g_{v1}{}^{v_{io}(s)} = \prod_{i=1}^{\theta}\left(g_{v1}{}^{v_i(s)}\right)^{c_i}$, $g_{w2}{}^{w_{io}(s)} = \prod_{i=1}^{\theta}\left(g_{w2}{}^{w_i(s)}\right)^{c_i}$ and

$g_{y1}{}^{y_{io}(s)} = \prod_{i=1}^{\theta}\left(g_{y1}{}^{y_i(s)}\right)^{c_i}$, and $(d_1, d_2, d_3)$ of the elements of $\mathbb{Z}_q$ over $\lambda$ bits with $\lambda$ a security parameter.

2. Identification method according to the preceding claim, wherein the step of verification of said received proofs (E8) comprises a verification of couplings by batch.

3. Identification method according to either of the preceding claims, wherein the identification of the entity comprises a comparison of the correspondence values to a predetermined threshold.

4. Identification method according to one of Claims 1 to 3, wherein the function F comprises a comparison of the result of the scalar product between said entity and reference biometric data to a predetermined threshold.

5. Identification method according to one of the preceding claims, wherein the encoding of k binary integers $u_i$ or $u'_i$ on an input wire of a j th multiplication operator, $1 \leq j \leq N/k$, is equal to $E_k{}^{\left(\frac{(z-1)N}{m}+(j-1)k+1\right)}(u)$ or $E_k{}^{\left(\frac{(z-1)N}{m}+(j-1)k+1\right)}(u')$ with $1 \leq z \leq m$, and is given by the formula:

$$E_k{}^{((j-1)k+1)}(x) = \sum_{i=1}^{k} 2^{\varepsilon_i} \cdot x_{(j-1)k+i} = 2^{\varepsilon_1} \cdot x_{(j-1)k+1} + \cdots + 2^{\varepsilon_k} \cdot x_{(j-1)k+k}$$

with $\varepsilon_1, ..., \varepsilon_k$ predetermined integers.

6. Computer program product comprising code instructions for the execution of a method according to any one of the preceding claims when this program is run by a processor.

7. Biometric identification system (2) comprising a client device (3) and a remote computation device (4), **characterized in that**:
said client device and said remote computation device each comprise a processor, an interface and a memory for implementing the steps of the identification method according to any one of Claims 1 to 5.

# FIG. 1

$u_1$    $u'_1$     [...]     $u_j$    $u'_j$     [...]     $u_N$    $u'_N$

$u_1 \cdot u'_1$       $u_j \cdot u'_j$       $u_N \cdot u'_N$

$+(-T)$

Dummy = 1

S

(ou S - T si comparaison à un seuil)

Split Gate

out = 0 / 1    [...]

**FIG. 2**

# FIG. 3

**Calcul d'une valeur de correspondance**

Représentation de F sous forme d'un circuit arithmétique — E1

Conversion du circuit arithmétique
en une représentation polynomiale, QAP ou multi-QAP — E2

Génération d'une clé publique d'évaluation
et d'une clé publique de vérification — E3

Obtention du circuit arithmétique
et de la clé publique d'évaluation — E4

F1

Détermination de valeurs de correspondance — E5

Génération de preuves de la correction de l'exécution
du calcul des valeurs de correspondance — E6

Transmission des valeurs de correspondance
et des preuves générées — E7

Vérification des preuves reçues — E8

F2 — **Identification de l'entité**

FIG. 4b

EP 3 168 754 B1

**FIG. 5a**

$$E_3^{(1)}(u) \qquad E_3^{(1)}(u') \qquad E_3^{(3\cdot(j-1)+1)}(u) \qquad E_3^{(3\cdot(j-1)+1)}(u') \qquad E_3^{(2998)}(u) \qquad E_3^{(2998)}(u')$$

$1 \qquad\qquad 1001 \qquad\qquad j \qquad\qquad 1000 + j \qquad\qquad 1000 \qquad\qquad 2000$

$r_1 \qquad\qquad [\ldots] \qquad\qquad r_j \qquad\qquad [\ldots] \qquad\qquad r_{1000}$

$$E_{u\cdot u',3}^{(1)} \qquad\qquad E_{u\cdot u',3}^{(3\cdot(j-1)+1)} \qquad\qquad E_{u\cdot u',3}^{(2998)}$$

$2002 \qquad\qquad 2001 + j \qquad\qquad 3001$

Dummy = 1

$0$

$r_{1001}$

$3002$

FIG. 5b

# FIG. 6a

EP 3 168 754 B1

EP 3 168 754 B1

**FIG. 6b**

$r_{\frac{N}{k \cdot m}+1}$

$\tilde{S}_1^{(in)}$ $\frac{3 \cdot N}{k \cdot m}+2+m$

$\frac{2 \cdot N}{k \cdot m}+1$ $\tilde{S}_z^{(out)}$

**Bus Banks**
**$1, \ldots, m$**

Buses $\tilde{S}_1^{(out)}, \ldots, \tilde{S}_m^{(out)}$

$r_{\frac{N}{k \cdot m}+2}, \ldots, r_{\frac{N}{k \cdot m}+1+m}$ $\frac{3 \cdot N}{k \cdot m}+2, \ldots, \frac{3 \cdot N}{k \cdot m}+1+m$

$\frac{3 \cdot N}{k \cdot m}+2+m$

$\tilde{S}_2^{(in)}$ $[\ldots]$

$\frac{3 \cdot N}{k \cdot m}+3+m$

$[\ldots]$

$\frac{3 \cdot N}{k \cdot m}+1+2 \cdot m$

$\tilde{S}_1^{(in)}$

$\tilde{S}_m^{(in)}$

**Local Bank 2**

$\tilde{S}$

Dummy = 1

FIG. 6c

$\tilde{S}_1^{(in)}$

$[...]$

$\tilde{S}_m^{(in)}$

Local Bank 2

$\tilde{S}$

Dummy = 1

$\frac{3 \cdot N}{k \cdot m} + 2 \cdot m + 2, \ldots, \frac{3 \cdot N}{k \cdot m} + 2 \cdot m + 27$

$r_{\frac{N}{k \cdot m} + m + 3}, \ldots, r_{\frac{N}{k \cdot m} + m + 28}$

$\frac{3 \cdot N}{k \cdot m} + 2 \cdot m + 28, \ldots, \frac{3 \cdot N}{k \cdot m} + 2 \cdot m + 53$

$a_2'$

$r_{\frac{N}{k \cdot m} + m + 29}, \ldots, r_{\frac{N}{k \cdot m} + m + 54}$

$a_1$

$\frac{3 \cdot N}{k \cdot m} + 2 \cdot m + 54, \ldots, \frac{3 \cdot N}{k \cdot m} + 2 \cdot m + 79$

$a_2$

$r_{\frac{N}{k \cdot m} + m + 55}, \ldots, r_{\frac{N}{k \cdot m} + m + 80}$

$\frac{3 \cdot N}{k \cdot m} + 2 \cdot m + 80, \ldots, \frac{3 \cdot N}{k \cdot m} + 2 \cdot m + 157$

$a_3'$

$r_{\frac{N}{k \cdot m} + m + 81}, \ldots, r_{\frac{N}{k \cdot m} + m + 158}$

$a_3$

$\frac{3 \cdot N}{k \cdot m} + 2 \cdot m + 158, \ldots, \frac{3 \cdot N}{k \cdot m} + 2 \cdot m + 183$

$r_{\frac{N}{k \cdot m} + m + 159}, \ldots, r_{\frac{N}{k \cdot m} + m + 184}$

$r_{\frac{N}{k \cdot m} + m + 2}$

Split Gate

S − T

$r_{\frac{N}{k \cdot m} + m + 185}$

$+(-T)$

$\frac{3 \cdot N}{k \cdot m} + 2 \cdot m + 184$

S-T

$r_{\frac{N}{k \cdot m} + m + 186}$

$\frac{3 \cdot N}{k \cdot m} + 2 \cdot m + 185$

$r_{\frac{N}{k \cdot m} + m + 187}$

Split Gate

$[...]$

$\frac{3 \cdot N}{k \cdot m} + 2 \cdot m + 213$

$r_{\frac{N}{k \cdot m} + m + 215}$

$\frac{3 \cdot N}{k \cdot m} + 2 \cdot m + 214$

out=0/1 $r_{\frac{N}{k \cdot m} + m + 216}$

EP 3 168 754 B1

FIG. 7a

EP 3 168 754 B1

**FIG. 7b**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Pinocchio: Nearly Practical Vérifiable Computation. **BRYAN PARNO ; CRAIG GENTRY ; JON HOWELL ; MARIANA RAYKOVA.** Proceedings of the IEEE Symposium on Security and Privacy. IEEE, 21 Mai 2013
- Geppetto: Versatile Vérifiable Computation. **CRAIG COSTELLO ; CEDRIC FOURNET ; JON HOWELL ; MARKULF KOHLWEISS ; BENJAMIN KREUTER ; MICHAEL NAEHRIG ; BRYAN PARNO ; SAMEE ZAHUR.** Proceedings of the IEEE Symposium on Security and Privacy. IEEE, 18 Mai 2015
- **ANTOINE DELIGNAT-LAVAUD ; CEDRIC FOURNET ; MARKULF KOHLWEISS ; BRYAN PARNO.** Cinderella: Turning Shabby X.509 Certificates into Elegant Anonymous Credentials with the Magic of Verifiable Computation. *2016 IEEE Symposium on Security and Privacy*
- PhotoProof: cryptographie image authentication for any set of permissible transformations. **ASSA NAVEH ; ERAN TROMER.** proc. IEEE Symposium on Security & Privacy. IEEE, 2016, 255-271